# EUROPEAN PATENT SPECIFICATION

(11) **EP 3 820 590 B1**
(45) Date of publication and mention of the grant of the patent: **06.11.2024**
(21) Application number: 19744803.8
(22) Date of filing: 10.07.2019
(51) Int. Cl.: B01D 29/05, B01D 29/23, B01D 29/54, B01D 29/58, B01D 29/64, B01D 29/90

(54) **SYSTEM AND METHOD FOR REDUCING MARINE POLLUTION**
SYSTEM UND VERFAHREN ZUR VERRINGERUNG DER MEERESVERSCHMUTZUNG
SYSTÈME ET PROCÉDÉ POUR RÉDUIRE LA POLLUTION MARINE

(30) Priority: 10.07.2018 GB 201811320; 29.10.2018 GB 201817671
(43) Date of publication of application: 19.05.2021
(73) Proprietor: Ichthion Limited, London, W12 0BZ (GB)
(72) Inventor: ROUSE, Robert, Exeter EX4 4QZ (GB)
(74) Representative: Barker Brettell LLP
(86) International application number: PCT/GB2019/051937
(87) International publication number: WO 2020/012179

(56) References cited:
- JP-A- S63 130 110
- JP-A- S63 134 014

## Description

### Field

The present invention relates to a system and a method for reducing marine pollution and, preferably, a system for reducing solid waste pollution.

### Background

Marine pollution is a significant problem for the health of the ocean, and a hazard to marine life. Each year, over eight million tonnes of plastics enter the ocean, and over 800 species are known to have ingested or been entangled in plastic waste in the ocean (EIA, 2018).

The problem of marine pollution is significantly widespread and pervasive such that tackling it is difficult. A technological solution must be sufficiently scalable to make a noticeable difference to the problem, and a high cost is typically associated with producing and maintaining systems of the required scale.

Areas with high concentrations of waste are also home to large plankton populations. Conventional filtration and removal (e.g. removal with a sufficiently fine net) can lead to an increased mortality of the plankton, which would in turn affect other marine species in that area.

The present invention seeks to address or at least ameliorate the above mentioned problems

JPS63134014A discloses a strainer in which water entraining solid matter flows into an element through an inflow pipe. The water is then sucked into a submersible pump through the water hole of the element and an outflow pipe. Solid matter in the river water is collected by the element, and striped off by a cleaning member rotating along with a rotary vane simultaneously with the inflow of river water. The solid matter existing in the vicinity of a discharge pipe is sucked along with water into a suction part kept at a pressure lower than the pressure in the strainer, and discharged to the outside from the diffuser part of the ejector.

JPS63130110 discloses a strainer comprising a pump and a motor. When the pump is started, solid matter having comparatively large particle diameter contained in raw water is trapped with a guard and is introduced into an element via an aperture in the guard and an inflow port and the water is passed through the water-passing holes of the elements and made into clean water. The clean water is sucked into a pump via an outflow port. Meanwhile, the solid from the raw water is trapped in the element, but is peeled off with brushes of a sweeping member. The filter face of the element is scoured with the brushes. The trapped and peeled solid matter and the other solid matter are transferred using screw blades and is discharged outside of the element through a discharge port.

### Summary

According to a first aspect of the invention, there is provided a system for reducing marine pollution in accordance with claim 1. Some optional or preferable features are set out in dependent claims. The housing may be elongate. The housing may define a longitudinal direction. The housing may be cylindrical and/or substantially hollow

The or each pollutant filter unit may comprise a first element e.g. a static element configured to inhibit output of pollutants from the housing and/or to entrap pollutants in the fluid flowing therethrough.

The housing may comprise one or more walls or sidewalls The housing may comprise a filtration chamber (e.g. an interior chamber of the housing) configured to receive the incoming fluid flow containing pollutants and output the de-polluted fluid flow. A hollow interior of the housing may define the filtration chamber. The filtration chamber may comprise one or more chamber walls or sidewalls The chamber wall(s) may be or comprise an inner wall of the housing. The chamber may be substantially cylindrical.

The dynamic or second element may be moveable (e.g. rotatable) with respect to the static or first element. The second element may be rotatable with respect to the first element. Alternatively, the second element may reciprocate with respect to the first element.

The second element may be or comprise a substantially dynamic element. The second element may further be moveable (e.g. rotatable) with respect to the housing. The first element may be or comprise a substantially static element, e.g. a static filter element, and may be static with respect to the housing. Alternatively, the first element may be or comprise a substantially dynamic element, e.g. the first element may be moveable (e.g. rotatable) with respect to the housing.

The or each pollutant filter unit may be arranged or disposed within the housing, e.g. within the hollow space of the housing and/or with the filtration chamber.

The housing may comprise an inlet through which the incoming fluid flow may enter the housing. The housing may further comprise an outlet through which fluid may exit the housing. The pollutant filter unit(s) may be positioned downstream of the inlet and upstream of the outlet.

The housing may comprise a fluid flow path between the inlet and the outlet. The inlet, the filtration chamber and the outlet may define the fluid flow path. The pollutant filter unit(s) may be disposed in the flow path, such that fluid passes through the pollutant.

The pollutant filter unit(s), in use, act to collect pollutants from a water environment such as the sea, which can then be disposed of or otherwise dealt with. The pollutant filter unit(s) may be configured to collect the pollutants and transport and/or direct the collected pollutants towards an outer edge or radius of the pollutant filter unit(s), where they can be further collected, transported away and/or removed from the housing. The filter unit(s) are preferably disposed substantially perpendicular to the flow of fluid and/or the longitudinal direction of the housing. Alternatively, the filter units may be disposed at an angle with respect to the longitudinal direction. Optionally, this angle may be between substantially 45 and 90 degrees to the longitudinal direction. Optionally, the angle may be between substantially 50 and 75 degrees to the longitudinal direction. Optionally, the angle may be approximately 60 degrees to the longitudinal direction.

Advantageously, aspects or embodiments of the invention provide for extracting marine and fluvial plastic pollution through integrated, commensal technologies. Aspects or embodiments of the invention provide a scalable solution to marine plastic pollution. Aspects or embodiments of the invention provide a self-sustaining and selfcleaning system adaptable to both dynamic and static mountings. For example, if the system has a processing area of about 6m², it can remove up to 120 tonnes per year.

Advantageously, the system can run on or be powered by the flow of fluid through the housing, e.g. by tidal/wave power. The system can be attached or attachable to a ship or marine vessel. The system may be removably attachable to a ship or marine vessel. The system therefore can make use of existing infrastructure and tidal power and/or ship-powered movement through the ocean. Alternatively, the system can be powered by a power source, such as a power source (e.g. a generator, engine and/or motor) on a marine vessel or structure.

The housing may comprise a front end, a rear end, and/or one or more sides between the front and rear ends. The inlet may be or comprise an opening at or near the front end of the housing. The front end may be or comprise the inlet. The outlet may be or comprise an opening at or near the rear end of the housing. The rear end may be or comprise the outlet. The front end/inlet and the rear end/outlet may be in fluid communication.

The hollow space of the housing may further define a fluid passage extending between the front end and the rear end in the longitudinal direction (e.g. substantially parallel to the fluid flow).

In one arrangement, the fluid path through the housing and/or filtration chamber may be substantially straight. For example, the outlet may be aligned substantially co-axially with the inlet.

The system further comprises at least one turbine configured to drive the second or dynamic element.

The turbine may be configured to be actuated by fluid flowing into the housing and/or filtration chamber. Additionally/alternatively, an additional power supply may be provided to the system to power and drive the turbine, such as for use in non-tidal areas and/or at times of low wave activity (e.g. in low fluid flow conditions). In this way, the turbines may be driven by the fluid flow, or driven by a power source to create a fluid flow through the system (e.g. by sucking or drawing fluid through the housing).

The system may further comprise a driveshaft configured to move the dynamic filter element and/or the cleaning member(s). The driveshaft may define a driveshaft axis. Rotation of the driveshaft about the driveshaft axis may drive movement of the dynamic filter element and/or the cleaning member(s). The dynamic filter element and/or the cleaning member(s) may be coupled directly or indirectly (e.g. via one or more intermediate connections, linkages or couplings) to the driveshaft. The dynamic filter element and/or the cleaning member(s) may be configured to rotate with or about the driveshaft. The driveshaft may be substantially aligned with the longitudinal axis of the filtration chamber/housing and extend at least partially into the filtration chamber.

The driveshaft may be driven by a drive system, such as a motor, connectable to a power supply. The power source may be external to the system. The system may comprise the drive system or the drive system may be located remotely from the system.

The driveshaft may couple the at least one turbine and/or the one or more dynamic elements.

The dynamic element(s) may be fixedly coupled or attached to the driveshaft (but moveable with respect to the housing and/or driveshaft). The static element(s), by contrast, may be fixed with respect to the housing. Variations in configuration are envisaged; the important point is that there is relative movement between the first and second elements.

The filter units, in use, may act to collect pollutants from a water environment such as the sea, which can then be disposed of or otherwise dealt with. The filter unit(s) may be configured to collect the pollutants and transport and/or direct the collected pollutants towards an outer (radial) edge or radius of the filter unit(s), where they can be further collected, transported away and/or removed from the housing.

Each of the one or more static elements may be or comprise a filter element or membrane. The filter element or membrane may be configured to collect or trap particles in the fluid at or above a predetermined threshold size, whilst permitting flow of fluid and particle below the threshold size through the membrane. The filter membrane may comprise a plurality of pores or apertures and the threshold size may be determined by the pore size. The pore size of the filter membrane may be in the range substantially 0.1 mm to 50 mm.

The filter membrane may be or comprise a net, e.g. a fabric net, or a mesh e.g. a metal mesh or other configuration that enables materials of a certain size to pass through but not others. A metal mesh would be suitable for "trapping" larger particles, whereas a fabric net is more suitable for smaller particle sizes (e.g. less than 1mm in diameter). As such, the system may be modified according to the desired particle sizes to be "trapped". A system may include both types of membrane, with a filter membrane comprising a fabric net being placed downstream of a filter membrane comprising a metal mesh. The dynamic and static elements are preferably positioned adjacent to or in the vicinity of one another. This ensures that pollutants "caught" or "trapped" by the filter membrane (i.e. prevented from following the fluid flow through the housing) can then be directed for removal by the one or more cleaning arm(s).

The static filter element may extend at least partially across the outlet of the housing and/or filtration chamber.

The filter membrane may be disposed substantially perpendicular to the flow of fluid (e.g. through the filter membrane) and/or the longitudinal direction of the housing. For example, a surface of the filter member may be arranged substantially perpendicular to the direction of fluid flow through the filter membrane. However, this perpendicular arrangement is not essential. Alternatively, the filter membrane or surface of the filter membrane may be disposed/arranged at a non-perpendicular angle with respect to the direction of fluid flow through the filter membrane. The key point is that the filter membrane presents a substantial cross-sectional area through which the fluid may flow.

Where the filter membrane is disposed or arranged at a non-perpendicular angle with respect to the direction of fluid flow therethrough, the angle may be less than 90 degrees from the direction of fluid flow therethrough. The angle may be in the range between substantially 45 degrees to 90 degrees. The optimum angle of the filter membrane to the flow direction therethrough may be a balance between using the angle to aid pollutant material transport to an outer edge or radius of the static filter element without impeding fluid flow through the static filter element.

The filter membrane may be or comprise a substantially planar element and/or planar filter surface. For example, filter membrane may be or comprise a planar sheet extending across the filtration chamber (i.e. between opposing housing/chamber sidewalls) and/or the outlet.

Alternatively, the filter membrane may be or comprise a substantially non-planar or curved element and/or filter surface. For example, the filter membrane may be or comprise a substantially conical element or a portion of a cone, e.g. where the axis of the cone is aligned substantially parallel to the direction of fluid flow through the filter membrane and/or the longitudinal axis of the housing. The tip of the cone may point towards the front end of the housing.

The angle of the filter membrane to the fluid flow therethrough or the cone angle (with respect to the cone axis) may be in the range between substantially 45 degrees to 90 degrees. Optionally, the angle may be between substantially 50 and 75 degrees. Optionally, the angle may be approximately 60 degrees.

Each of the one or more dynamic elements may be or comprise one or more cleaning arms or cleaning elements/members.

The cleaning element(s)/member(s) or arm(s) may be configured to rotate with or about the driveshaft to sweep or otherwise direct or transport the pollutants collected/trapped by the filter membrane for removal from the housing. For example, the cleaning arm(s) may be configured to sweep or otherwise direct or transport the pollutants collected/trapped by the filter membrane towards an outer (radial) edge or radius of the filter unit(s), where they can be further collected, transported away and/or removed from the housing. Each cleaning arm/member/element may comprise at least one of more of a brush; scraping blade; and/or a vortex generator. Additionally or alternatively, each cleaning arm may comprise any mechanism sufficient to direct the "trapped" pollutant for removal. Each cleaning arm may be straight, angled or curved. The or each cleaning member may be or comprise a helical or spiral member.

The cleaning arm(s)/member(s) may be disposed adjacent to the static filter element. The cleaning member(s) may be configured to move across a surface of the static filter element to direct the pollutants entrapped thereon towards the one or more pollutant outlets (e.g. by sweeping or otherwise transporting the pollutants). Where there is more than one cleaning member, each cleaning member may be coupling directly or indirectly to each other, such that the cleaning members move together.

The dynamic filter element and/or cleaning arm(s)/member(s) may be configured to direct or move the pollutants entrapped by the static filter element or filter membrane in one or more directions across or along the surface of the static filter element or filter membrane. The one or more directions may depend on the form of the static filter element and the cleaning member(s)

Where the filter membrane is disposed substantially perpendicular to the direction of fluid flow therethrough, the dynamic filter element and/or cleaning member(s) may direct the pollutants across the surface of the static filter element in one or more directions substantially perpendicular to the direction of the flow path through the static filter element or filter membrane.

Alternatively, where the filter membrane is disposed substantially non-perpendicular to the direction of fluid flow therethrough, the one or more directions may be at an angle between substantially 45 degrees to 90 degrees from the direction of fluid flow through the static filter element or filter membrane.

The housing may be configured such that the direction of fluid flow through the static filter element is substantially parallel to the longitudinal axis and/or to the driveshaft axis. For example, the static filter element may extend at least partially between opposing sidewalls of the housing/filtration chamber and the outlet may be positioned behind the pollutant filter unit (i.e. towards the rear end of the housing). In this arrangement, the static filter element or filter membrane surface may be arranged axially with respect to the dynamic filter element and/or cleaning member(s) (e.g. along the longitudinal axis or rotation axis of the dynamic filter element). In this arrangement, the dynamic filter element and/or cleaning arm(s)/member(s) may be configured to direct the pollutants entrapped by the static filter element in a direction substantially perpendicular to the driveshaft or longitudinal axis, or at an angle between substantially 45 degrees to 90 degrees from the driveshaft axis.

The system may further comprise a deflector element coupled to an end or the 'front' end of the housing for preventing large objects entering the system. Prevention of large objects entering the system can avoid or ensure that the system is not jammed by large pollutants, and can reduce the amount of marine life that can enter (and so potentially be affected by) the system.

The housing and/or the filtration chamber may further comprise one or more apertures or pollutant outlets configured to receive collected pollutants directed by the dynamic element. The or each aperture or pollutant outlet may be disposed at, in or near a wall of the housing and/or filtration chamber and adjacent to the dynamic filter element.

The deflector element may be configured to inhibit objects larger than a width of the apertures/pollutant outlets from entering the housing and/or filtration chamber.

A series of apertures or pollutant outlets may be arranged around the housing and/or filtration chamber, such as on/in the housing/chamber wall. In an embodiment, the apertures are aligned linearly or radially with the dynamic element (i.e. along a direction substantially perpendicular to the direction of fluid flow). The apertures may be configured to receive the pollutants directed by the dynamic elements for removal from the housing.

In use, the dynamic filter element may move with respect to the static filter element to direct pollutants entrapped by the static filter elements towards the one or more apertures or pollutant outlets.

The or each pollutant outlet may be or comprise a valve. The aperture(s) may be no-return valves, which will prevent the pollutants re-entering the system. Any valve of suitable robustness and simplicity could be used. For example, the or each no-return valve may be a ball check valve. Alternatively, the or each no-return valve may be a back water valve. Further alternatively, the series of apertures may comprise a combination of ball check and backwater valves. In the case where the dynamic element comprises cleaning arms/members, rotation of the cleaning arms/members may direct pollutants to the extreme radius of the (inner wall of the) housing or to an edge or outer radius of the filter unit, where the pollutants will exit through the series of apertures/no-return valves. The pollutants may be transported to the cavity or an external storage via one or more pipes.

The or each valve may be configured to actuate in response to rotation of the driveshaft and/or the dynamic filter element. The or each valve may be configured to actuate in synchronization with the movement of the dynamic filter element, and optionally or preferably, when the or a cleaning arm of the dynamic filter element is aligned with a respective valve. In this way, the driveshaft is used to actuate the valve(s) proceeding the passage of the/a cleaning arm/member past the respective valve, such that the valve actuation is synchronized with the driveshaft rotation.

Advantageously, this reduces the duty cycle of the valves (i.e. they not always open) and the number of valves that are open at any one time, which may reduce the amount of "escape flow" through the valve(s). This in turn may increase the amount of water directed through the static filter element and thus increase the efficiency of pollutant extraction from the water flow. For example, for a system with n valves and x cleaning arms (where n > x), with a synchronized valve actuation arrangement (as described above) only x valves are open at any one time. If all n valves were permanently open, the escape flow through the valves would be a factor n/x times greater than when using the synchronized valve actuation arrangement, and therefore a factor of x/n less efficient than when using the synchronized valve actuation arrangement.

The system may further comprise a valve actuator assembly disposed within the housing configured to actuate the valves in response to rotation of the driveshaft and/or the dynamic filter element. The valve actuator assembly may be part of the housing, pollution filter unit or the dynamic filter element.

The actuator assembly may comprise an actuator arm coupled at one to a respective valve, and a cam coupled to the driveshaft, wherein the actuator arm is actuated by a cam or profiled surface of a cam. The cam surface may be an axial surface or a radial surface of the cam. The actuator arm may be arranged to receive an actuating force from the cam surface to actuate the respective valve. The actuator arm may be or comprises a cam follower configured to run along the cam surface to actuate the respective valve.

The actuator assembly may further comprise a plate member disposed within the filtration chamber adjacent to the dynamic filter element. The plate member may form at least a part of a chamber wall comprising the or each valve. The or each actuating member may be coupled to the plate member. The or each actuating member may be pivotably coupled to the plate member. The actuating member may be configured to pivot or otherwise move when an actuating force is received by the cam surface thereby actuating the valve. For example, the cam or profiled surface may comprise one or more raised portions or projections that rotate with the cam and interact with the actuating arm periodically with each revolution of the cam. The profile of the cam surface may be configured such that each time the cam surface interacts with an actuator arm a cleaning member is aligned with the respective valve.

The housing may comprise an outer wall and an inner wall. The inner wall may be adjacent the fluid passage. The fluid passage, inlet, outlet, front end opening and/or the rear end opening may be defined by the inner wall. The filtration chamber may be defined by the inner wall of the housing. The filtration chamber and/or fluid passage may have a width W. Where the filtration chamber/housing and/or fluid passage is substantially circular in cross-section, the width W may correspond to a diameter of the filtration chamber and/or fluid passage. The width W may not be uniform in the longitudinal direction.

The inner surface/wall of the housing may comprise a front tapered section at or near the front end, and/or a rear tapered section at or near the rear end. The width W of the tapered section at or near the front end may increase in a frontward direction. The width W of the tapered section at or near the rear end may increase in a rearward direction. The front end opening or inlet may comprise the front tapered section. The rear end opening or outlet may comprise the rear tapered section. Where turbines are present, the turbine(s) and the filter unit(s) may be arranged downstream of the front tapered section.

Advantageously, the tapered front end may reduce the cross-sectional area of the fluid passage and thereby increase the velocity of fluid flowing through the housing. This may be particularly advantageous where one or more turbine(s) are used to drive the dynamic filter element. This may enable greater energy extraction from the fluid flow, thereby increasing the efficiency of the turbine(s). This may also improve the throughput through the filter unit(s).

The aperture(s) or pollutant outlet(s) may be provided in the inner wall of the housing (i.e. a wall of the filtration chamber). The apertures may lead into a cavity bounded by an outer wall of the housing. Pollutants may be swept into the cavity through the aperture(s), where they may be retained until a time when they are to be removed. One or more outlets e.g. doors or hatches may be provided in the outer housing wall to allow collected pollutants to be removed for recycling or disposal and to empty the system for further use.

Additionally or alternatively, the system may further comprise a pumping system. The pumping system may be connected to the or each aperture or pollutant outlet and/or to the cavity for transporting the pollutants out of the housing or cavity, e.g. to an external storage and/or a sorting system The pumping system may further comprise one or more pumps and one or a plurality of pipes connected to the one or more apertures or to the cavity (e.g. to the outer wall of the housing). The pipe(s) may be configured for transporting the pollutants out of the housing/cavity, e.g. to a processing stage and/or to external storage.

The pipes may further be connectable to the pumping system for pumping the pollutants through the pipes. The pumping system may be configured to pump pollutants out of the cavity or pump the pollutants through the apertures and/or no-return valves. The pumping system may comprise the pipes. The pumping system may further comprise one or more pumps. Any suitable/known pumping system may be used. The pipe(s) may be located alongside any electrical cables needed to connect electrical components of the system, to facilitate and save on infrastructure installation costs.

Once the pollutants have passed through the apertures/no-return valves into the cavity, collection chamber and/or pipe(s) they may be transferred to a processing stage such as a separation system. The apertures/no-return valves, the cavity and/or the collection chamber may be connectable to the processing stage via the one or more pipes. The separation system may be configured to separate pollutant materials (i.e. non-biological materials) from any biological materials also collected by the system. Biological material may then be re-introduced to the fluid source e.g. the water or sea. For example, the pipe(s) may pass from the aperture(s)/no-return valve(s) through the cavity and out to the separation system, or the pipe(s) may pass from the cavity and out to the separation system.

Alternatively or additionally, pollutants may be transferred from the apertures/no-return valves, the cavity and/or the collection chamber to an external storage stage via the pipe(s). The pollutants may be stored in the external storage stage for later removal and/or transportation to the processing stage. Pollutants may be transferred to the separation system immediately after being collected, or collected pollutants may be stored for a period of time (e.g. stored in the external storage stage or the cavity) before being transferred to the separation system.

The pumping system, external storage stage and/or the processing stage may be located remotely from the housing, e.g. on-shore or on a marine vessel or structure. In the case where the dynamic element comprises cleaning arms, rotation of the cleaning arms may direct pollutants to the extreme radius of the (inner wall of the) housing, where the pollutants will exit through the series of no-return valves. The pollutants may be transported to the cavity or an external storage via one or more pipes.

The system may further comprise a generator coupled to the turbine(s) and/or driveshaft, such that rotation of the turbine generates electricity. This generates electricity which may be used to power the pumping system. This may be the sole use of the electricity - an advantage of this is that the system is self-contained and so easy to maintain and replace when necessary. Alternatively, excess generated electricity may be sold to the grid, improving the cost-effectiveness of the system. This may be achieved in accordance with known generators/standard techniques. The generator may be mounted to the end of a power shaft extending from the turbine and/or driveshaft. The drive shaft may pass through an inner wall of the housing. The power shaft may further comprise any electrical cabling for extracting the electrical power output and optionally for powering the turbines (e.g. in low fluid flow conditions).

Alternatively, the electricity required by the pumping system may be sourced externally, such as from solar cells on a nearby marine vessel, or from an on-shore power supply This ensures that the system is as lightweight and space-efficient as possible.

Each turbine may be coupled to the same driveshaft, or to separate driveshafts coupled at a gearbox. In this way, each turbine rotates in a different direction and may rotate at a different speed.

One turbine, e.g. the first turbine of the pair, is configured to rotate one way, and the other turbine is configured to rotate the other way. These contra-rotating turbines may be coupled to either end of the driveshaft. Advantageously, a pair of contra-rotating turbines provides a more efficient system. Other advantages include reduced torque acting on the housing and reduced swirl and wake turbulence. Advantageously, with contra-rotating turbines, the system is gyroscopically stabilized, such that any rotational forces that act upon other components of the system as a result of one turbine is substantially cancelled by the rotational forces from the other turbine

Both turbines can be driven by the fluid flow, providing a higher energy output over a given period of time. Alternatively, the system can be driven by an exterior power source such as a motor. The system may be driven, at least in part, via the powershaft. This may enable the speed of each turbine to be set or controlled separately. This may be advantageous in low fluid flow conditions, e.g. where the turbines are driven by fluid flow alone, the forward turbine may rotate at a faster rate than the rear turbine.

The system may further comprise a gearing system coupled to the driveshaft, configured to control the rate of movement of the dynamic element. The rate of movement (e.g. rate of rotation) of the dynamic element may be controlled to be at a proportional speed to the speed of at least one turbine, which in turn rotates proportionally to the fluid flow. Collection of pollution by the static element will also rely on the fluid flow rate. The gearing system ensures that the dynamic element moves at a rate necessary to prevent excess deposition of pollutants on the static element before being removed. The gearing system may be or comprise a set of bevel gears. The gearing system may be configured to gear down the speed of the turbine for the dynamic element. The gearing system may comprise a gearbox with a fixed ratio. Alternatively, the gearbox may have adjustable ratios. In either case, the gearing ratio can be set dependent on the expected concentration of pollutants at the site in the area where the system is situated/travels through

Pollutants will collect on the static filter element and/or filter membrane at a rate proportional to the pollutant concentration C in the fluid flowing therethrough and the fluid flow rate, e.g. proportional to the tidal flow rate, river flow rate, or speed of movement of the housing relative to a body of fluid. The cleaning rate of the pollutant filter unit may be proportional to the rate or movement or rotation rate of the dynamic filter. The cleaning rate may be controlled or otherwise varied to ensure that pollutants collected on the filter membrane(s) are directed for removal at an appropriate rate (i.e. a rate that avoids/eliminates excess deposition of pollutants on the filter membranes). The cleaning rate may be controlled by the gearbox and/or the drive system based on the pollutant concentration C, tidal flow rate, river flow rate, and/or speed of movement of the housing relative to a body of fluid (e.g. speed of the marine vessel to which it is attached). The cleaning rate may be controlled manually by an operator or automatically based on the output of one or more sensors (e.g. fluid flow and/or pollutant concentration sensors).

In another arrangement of the system, the fluid path through the housing may not be straight. For example, the inlet may be or comprise an opening at or near the front end of the housing and the outlet is located in a side of the housing. Alternatively, the outlet and/or the inlet may located in a side (sidewall) of the housing and/or a chamber sidewall. For example, the inlet and/or the outlet may be or comprise an opening in the side of the housing and/or chamber sidewall. The housing and/or filtration chamber may comprise a sidewall opening leading to the outlet. Additionally or alternatively, the housing and/or filtration chamber may comprise a sidewall opening leading to the inlet. The opening in the housing sidewall and/or chamber sidewall opening may extend around the housing and/or chamber sidewall e.g. about the longitudinal axis.

In this arrangement, the housing may be configured such that the direction of fluid flow through the static filter element is substantially not parallel to the longitudinal axis and/or to the driveshaft axis. The direction of the fluid flow path through the static filter element may be substantially perpendicular to the driveshaft axis, or at an angle between substantially 45 degrees to 90 degrees from the driveshaft axis. For example, the static filter element or filter membrane may be arranged in a housing/chamber sidewall. The static filter element may extend at least partially across an opening in the chamber sidewall that leads to the outlet. The outlet may be positioned to the side of the pollutant filter unit. The static filter element or filter membrane surface may be arranged substantially radially with respect to the dynamic filter element and/or cleaning member(s).

In this arrangement, the static filter element or filter membrane surface may extend at least partially around the dynamic filter element (e.g. about the longitudinal axis or rotation axis of the dynamic filter element). The filter membrane may be or comprise a substantially cylindrical element or a portion of a cylinder (e.g. where the cylinder axis is substantially parallel to the longitudinal axis of the housing and/or filtration chamber and/or substantially parallel to the driveshaft axis).

In this arrangement, the dynamic filter element may be configured to direct the pollutants entrapped by the static filter element in a direction substantially parallel to the driveshaft or longitudinal axis.

The pollutant filter unit may further comprise a flow directing element configured to direct at least a portion of the incoming fluid flow towards the static filter element. For example, the flow directing element may be configured to produce a radial component to the direction of the flow path through the static filter element with respect to the longitudinal or driveshaft axis. The flow directing element may comprise a flow directing surface, said surface being inclined with respect to the longitudinal or driveshaft axis. The flow directing element may be coupled to the dynamic filter element and/or the driveshaft. The flow directing element or surface may be substantially conical.

The aperture(s) or pollutant outlet(s) may lead into a collection chamber within the housing. The collection chamber may be defined by an inner wall of the housing. Where the driveshaft is driven by a drive system (e.g. a motor), the drive system may be disposed within the collection chamber.

The system may comprise a plurality of filtration chambers. In this case, the aperture(s) or pollutant outlet(s) of the first filtration chamber may lead into a second filtration chamber, and so on. In this case, the pollutant outlet(s) of the first filtration chamber may or comprise the inlet(s) of the second filtration chamber, and so on. The pollutants in solution may pass through several filtration chambers before reaching the collection chamber. The housing may comprise each filtration chamber and the collection chamber. Alternatively, the system may comprise a modular housing including separate housing modules for each filtration chamber and/or the collection chamber. Each module may be connectable to each other and interchangeable. In this way, the system may be configurable.

The system may be configured to couple to a marine vessel, such as a (merchant) ship. Alternatively, the system may be configured to couple to a fixed marine structure, such as a pier or a floating platform. Alternatively, the system may be free-standing. In this case, the system can be selectively lowered into areas of high pollution, reducing unnecessary wear on the dynamic elements.

If the system is attachable or attached to a vessel, rather than a fixed structure, there may be occasions where the dynamic element does not need to move (e.g. in areas with minimal pollution). A gearing system ensures that the dynamic element can be isolated and so does not move or does not necessarily move with the turbines. This may increase the lifespan of the system, by reducing the wear on the dynamic element.

An advantage of coupling the system to a moving vessel is that a larger area of the ocean is covered, which in theory ensures a greater reduction of pollutants. However, installing the system on a fixed structure in areas where the pollution is significant may have an equally noticeable effect, with reduced cost and less international coordination required.

The system may be removably attachable to a vessel or other structure to enable it to be used at predetermined periods of time, and/or when the ship/structure is in a particular location.

The system may be primarily configured to reduce marine contaminants such as plastic pollution.

The system may further comprise a separation or sorting system configured to separate biological (e.g. plankton) and non-biological material (e.g. plastics), wherein the biological material is rejected prior to the removal of the pollutants from the housing. Alternatively, sorting may take place at a later stage e.g. on land. In either instance, the sorting system may comprise a froth flotation system, wherein the materials are separated into distinct layers with the use of a non-toxic biological detergent such as a fatty acid. Each distinct layer can then be skimmed from the group, and either stored or returned to the ocean (depending on whether the layer contains biological or pollutant material). For example, biological material such as plankton can be returned to the water whilst collected plastics materials can be stored for recycling at a later date. Note - references to "biological" materials are to be interpreted as references to life/organic matter, including plant and zoological cells, materials, etc.

According to a second aspect of the invention, there is provided a method of reducing marine pollution. The method may comprise providing or using a system according to any prior description. The method may comprise providing a storage unit to store the collected pollutants. The method may further comprise coupling the system to a fixed marine structure, such as a pipeline, floating platform or pier, or a marine vessel, such as a ship. The method may comprise periodically emptying collected pollutants.

Alternatively or additionally, the method may comprise providing an incoming fluid flow containing pollutants. The method may further comprise filtering pollutants from the fluid flow. The method may further comprise directing the filtered pollutants for removal from the system. The method may further comprise outputting a de-polluted fluid flow. The method may further comprise collecting the filtered and directed pollutants.

Alternatively or additionally, the method may comprise any of the following steps: filtering pollutants from an incoming fluid flow using a static filter to de-pollute the fluid flow; directing the pollutants entrapped on the static filter away from the static filter to clean the filter; collecting the directed pollutants; and/or outputting the de-polluted fluid flow.

"Periodically" could be at regular or irregular time intervals, and/or when emptying is required e.g. the cavity is too full. In the case where the system is coupled to a marine vessel, "periodically" may refer to each completed journey, or round-trip, or at every stop, dependent on the expected level of pollution for each journey. In the case where the system is coupled to a fixed marine structure, the frequency of "periodically" may depend on the measured level of pollution in the area where the structure resides.

The method may further comprise sorting the collected pollutants from the storage system into biological and non-biological material. The method may further comprise returning the biological material to the ocean.

The additional step of returning the biological material to the ocean may assist in reducing any potential negative effect that the pollution treatment may have on the local marine life. This is optimal for a fixed structure, as emptying a storage unit from a travelling ship into a single location may lead to introducing non-native species into coastal regions, which may cause disruption to the local species.

Features which are described in the context of separate embodiments may instead or also be provided in combination in a single embodiment and/or be interchangeable. Conversely, various features which are, for brevity, described in the context of a single embodiment may also be provided separately or in any suitable sub-combination. Features described in connection with a device or system may have corresponding feature definable with respect to a method, and vice versa.

These and other aspects of the invention will be apparent from, and elucidated with reference to, the embodiments described hereinafter.

### Brief description of Drawings

Embodiments will be described, by way of example only, with reference to the drawings, in which:
figure 1 illustrates a schematic view of an embodiment, showing an end view of the system;
figure 2 illustrates a schematic view of an embodiment, showing a cross-sectional view of the system;
figure 3 illustrates a schematic view of an embodiment, showing a perspective view of the system;
figure 4 illustrates a view of a prototype of an embodiment, showing an end view of the system;
figures 5a and 5b illustrate schematic views of an exemplary filter unit;
figure 6 shows a schematic diagram of a system;
figure 7 illustrates a schematic view of a separation system;
figure 8 illustrates a workflow map of an exemplary method of reducing marine pollution;
figure 9 shows a schematic cross-sectional view of the system according to another embodiment;
figure 10 shows a schematic perspective view of the filter unit shown in figure 9;
figure 11 shows a schematic view of the dynamic filter element shown in figure 10;
figure 12 shows another view of the dynamic filter element of figure 11;
figure 13 illustrates the material flow through the filter unit of figure 10;
figure 14 and 15 show alternative views of a valve arrangement according to an embodiment;
figure 16 shows a schematic cross-sectional view of the system according to another embodiment; and
figure 17 and 18 show schematic view of a defector element attachable to the system of figures 1-4 and 9.

It should be noted that the Figures are diagrammatic and not drawn to scale. Relative dimensions and proportions of parts of these Figures may have been shown exaggerated or reduced in size, for the sake of clarity and convenience in the drawings. The same reference signs are generally used to refer to corresponding or similar feature in modified and different embodiments.

### Detailed description of embodiments

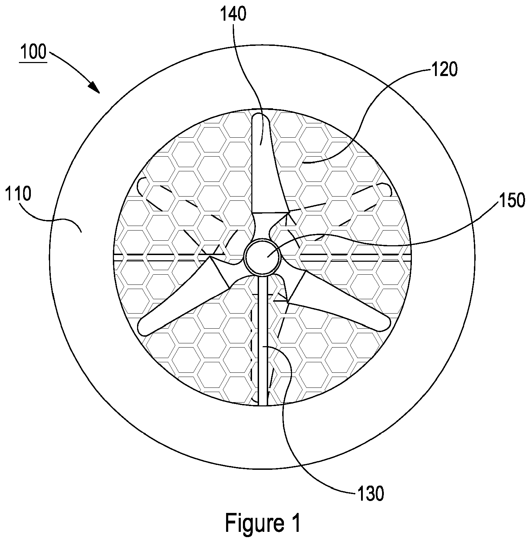

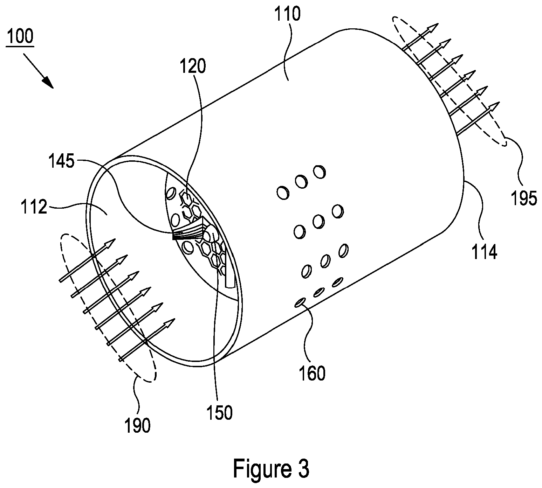

Figures 1 to 3 illustrate schematic views of an example system 100. The system 100 comprises a housing 110 configured to receive an incoming fluid flow 190, and output a de-polluted fluid flow 195. The incoming fluid flow 190 enters the housing 110 at a front end 112 of the housing 110. In an embodiment, the flow exits the housing 110 at a rear end 114 () of the housing 110. The front end 112 and the rear end 114 may be or comprise an opening in the housing 110 through which incoming fluid 190 may enter the system 100 and outgoing fluid 195 may exit the system 100, respectively. The housing 110 may further define a fluid passage 105 extending between the front end 112 and the rear end 114 in a longitudinal axis of the housing 110 (and substantially parallel to the fluid flow). As such the front end 112 and the rear end 114 are in fluid communication. The front end may be or comprise an inlet 112 and the rear end may be or comprise an outlet 114

The system 100 further comprises a turbine 140. The turbine 140 is located toward the front end 112 of the housing 110. A second turbine 145 is provided, located toward the rear end 114 of the housing 110. The pair of turbines 140, 145 is a contra-rotating pair. One turbine, e.g. the first turbine 140, may be configured to rotate one way, and the other turbine 145 is configured to rotate the other way. In this way, the system is gyroscopically stabilized, such that any rotational forces that act upon other components of the system 100 as a result of one turbine 140 is substantially cancelled by the rotational forces from the other turbine 145.

The turbines 140, 145 may be configured to be driven/rotated by the flow of fluid through the system 100. For example, in use, the system 100 may be substantially submerged in a body of fluid and the flow of fluid may be driven by movement of the body of fluid relative to the system 100, e.g. tidal flow or river flow or the like, and/or by movement of the system 100 relative to the body of fluid, e.g. the system 100 may be attachable to a marine vessel, such as a ship to be physically pulled through the body of fluid. The turbines 140, 145 each sit in a plane that is substantially perpendicular to the longitudinal axis of the housing 110, extending from the front end 112 to the rear end 114 of the housing 110) (and substantially perpendicular to the fluid flow). The turbines 140, 145 are coupled to and, when the turbine(s) 140, 145 are driven by tidal or fluid flow, provide power to rotate a driveshaft 150. Each turbine 140, 145 may be coupled to the same drive shaft 150, or to separate drive shafts 150 coupled at a gearbox 170. In this way, each turbine 140, 145 may rotate at a different speed and/or in a different direction.

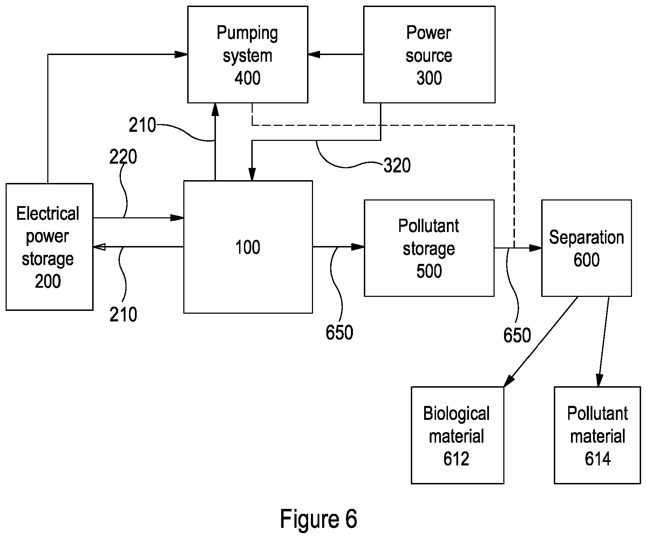

The turbines 140, 145 may also be configured to provide an electrical power output 210. The electrical power output 210 may be stored in an electrical storage unit 200, e.g. in a battery for later use (see Figure 6).

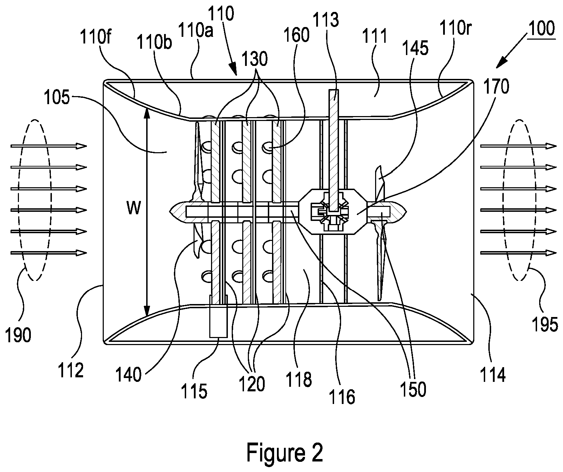

The system 100 may also comprise a generator (not shown), connected to the driveshaft 150. The generator may also/instead be coupled to the turbine(s) 140, 145, and/or the gearbox 170. This enables transformation of rotation into electrical power (e.g. as with hydro-electric turbines). Rotation of the driveshaft 150 will generate electricity (as with hydro-electric turbines), which can then be used to power the pumping system. The generator may be an alternator or dynamo-type generator or any other suitable generator known in the art. In the example shown in figure 2, a power shaft 113 is coupled to the gearbox 170 for providing power to the drive shaft and/or for providing a power output from the turbines 140, 145. The power shaft 113 may be coupled to the gearbox 170 for receiving an electrical power output 210 produced by the generator (in this example, a generator may be provided in the gearbox 170). Alternatively, the generator may be mounted to the power shaft and not housed in the gearbox.

Alternatively, such as in areas with low tidal power, the driveshaft 150 can be driven by a power source (such as by the excess electricity stored from a generator), which can the drive the turbines 140, 145 and dynamic elements 130.

Alternatively or additionally, the turbine(s) 140, 145 and/or the cleaning arm(s) 130 may be configured to be electrically driven, e.g. by an electrical power input 220, 320. The electrical power input 22, 320 may be provided to the drive shaft 150 from an external power supply via the power shaft 113. The external power supply may be an external power source 300 such as an on-shore power source (e.g. from a generator, battery or the power grid) or an off-shore power source such as from/on a marine vessel or structure. Alternatively, the external power supply may be the electrical power storage unit 200 storing the electrical power generated by the system 100 (see Figure 6). In this driven mode, the system 100 may itself create a fluid flow 190, 195 by sucking or drawing fluid through the front end 112 of the housing 110. This driven mode may be particularly suitable in low fluid flow conditions, where the flow of fluid (e.g. tidal flow or river flow) is insufficient to drive the turbine(s) 140, 145 to operate the system 100.

Disposed between the turbines 140, 145, and coupled to the or each driveshaft 150, is a series of pollutant filter units 115. Each pollutant filter unit 115 comprises a static element 120 (being or comprising a filter membrane 120a) and a dynamic element 130 (being or comprising a cleaning arm). The filter units 115 are located in the vicinity of the first turbine 140, i.e. nearer the front end 112 than the rear end 114 of the housing 110 and between the first turbine 140 and the gearbox 170. Three filter units 115 are shown in Figure 2, but it will be appreciated that fewer (e.g. 1 or 2) or more (e.g. 4, 5, 6 or more) could be used.

The filter units 115 are shown to be substantially perpendicular to the longitudinal direction and/or fluid flow, but they could instead be at an angle e.g. to the longitudinal direction. An advantage of a multi-stage system as shown may be that the risk of the system 100 clogging up or the pollution collecting too rapidly to be cleared may be reduced. Additional turbines could also be provided e.g. to better deal with stronger flow rates / higher pollution (not shown).

The power shaft 113 and optionally any electric cables required for connections to/from the gearbox 170 are proved within a sealed enclosure.

The housing 110 comprises an outer surface 110 and an inner surface 110b.

The fluid passage 105, the front end opening 112 and the rear end opening 114 may be defined by the inner surface or wall 110b. The inner surface 110b or interior of the housing 110 may define a filtration chamber 106 in which the filter units 115 are arranged. The fluid passage 105 may be or comprise the chamber 118. The inlet 112 may lead to the chamber 106 and an outlet 114 may lead from the chamber 118.

In an embodiment, the fluid passage 105 has a width W, e.g. where the fluid passage 105 is substantially circular in cross-section, the width W may correspond to a diameter of the fluid passage 105. Preferably the or each filter membrane 120a extends across the width of the fluid passage 105. The width W may not be uniform in the longitudinal direction. The inner surface 110b may comprise a front tapered section 110f at or near the front end or inlet 112, and/or a rear tapered section 110r at or near the rear end or outlet 114 in which the width W increases in a respective frontward or rearward direction (see Figure 2). The front end opening or inlet 112 may comprise the front tapered section 110f, and where present, the rear end opening or outlet 114 may comprise the rear tapered section 110r. The turbine(s) 140, 145 and the filter unit(s) 115 are arranged downstream of the front tapered section 110f or front end opening 112.

The tapered front end opening or inlet 112 (in which the width or cross-sectional area A of the opening decreases in size in the direction of fluid flow) may serve to accelerate fluid flow (velocity) through the turbine(s) 140, 145 and the filter unit(s) 115, since flow rate = velocity * A, where flow rate must be conserved (i.e. if A decreases, the velocity must increase). This may advantageously enable greater energy extraction from the fluid flow, thereby increasing the efficiency of the turbine(s) 140, 145. This may also improve the throughput through the filter unit(s) 115.

The width of the front end opening 112 and/or the rear end opening 114 may be in the range of substantially 0.5m to 12m.

The width W of the fluid passage 105 between the two tapered sections 110f and 110r (the chamber 106) may be substantially uniform. Alternatively, the portion of the inner surface 110b between the two tapered sections 110f, 110r may be non-uniform, e.g. comprising a further tapered section (not shown). The further tapered section may have a width W which decreases in the rearward direction. This may further serve to accelerate fluid flow through the second turbine 145.

The gearbox 170 may be physically supported by one or more supports 116. For example, the supports 116 may hold the gearbox 170 in the center of the fluid passage 105. The support(s) 116 may extend between the gearbox 170 and the inner surface 110b of the housing 110, e.g. radially or otherwise. The support(s) 116 may further served to support the drive shaft(s) 150 and turbines 140, 145 through their coupling to the gearbox 170. Alternatively, the drive shaft(s) 150 and turbines 140, 145 may further be supported by the filter unit(s) 115 through their couplings thereto.

A cavity 111 is defined between the inner and outer surfaces 110b 110a. Pollutants passing through the system 100 may be collected in the cavity 111, as described below. The pollutants may be in a solution, as water from the outside water environment will also pass into the cavity 111 e.g. along with the pollutants. The depth of the cavity may decrease towards the longitudinal extremes so as to provide a gradual and smooth passage for water and pollutants entering the system 100 and/or to direct the fluid flow.

The or each filter membrane 120a inhibits movement of pollutants through the system 100 and 'traps' pollutants in the system 100, provided the pollutants are of a size greater than that which the filter membrane 120a permits passage of (e.g. the filter pore size). Preferably the or each filter membrane 120a extends to the inner surface 110b of housing 110. The cleaning arm(s) 130 is(are) configured to rotate and direct pollutants trapped/collected at/on the filter member 120 for collection and removal from the housing 110. Each filter membrane 120a is positioned adjacent to or in the vicinity of a or each cleaning arm 130. Preferably the filter membrane 120a is positioned on the output or rearward side of the cleaning arm 130 with the cleaning arm 130 on the inflow or frontward side (e.g. the filter membrane 120a is positioned behind the cleaning arm 130). This enables rotation of the cleaning arm 130 (e.g. in the plane of the cleaning arm 130) to sweep and direct pollutants trapped by the filter membrane 120a.

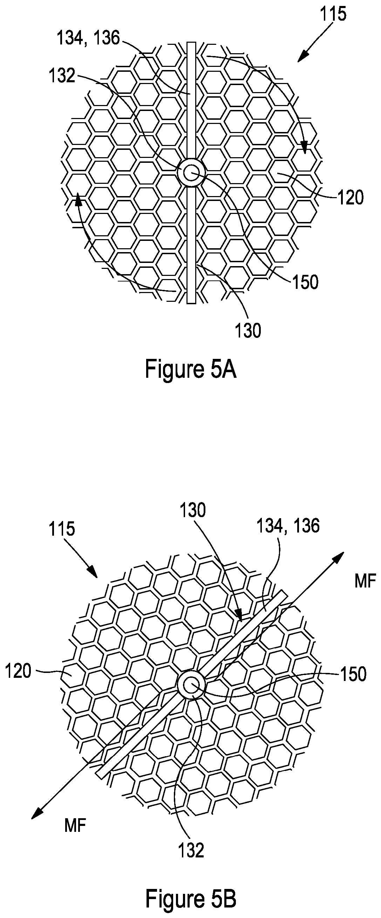

The cleaning arm(s) 130 may be configured to rotate with or about the drive shaft 150, such that the cleaning arm(s) 130 may rotate at the same speed or at a different speed to the turbine(s) 140, 145. In an embodiment, the cleaning arm(s) 130 is(are) driven indirectly by the turbine(s) 140, 145 via the gearbox 170. The or each cleaning arm 130 comprises a hub portion 132 that receives the driveshaft 150 and an arm portion 134 that extends away from the hub portion 132 (see Figures 5a and 5b). In an embodiment, the or each hub portion 132 is connected to the gearbox 170 to control the rotational speed thereof (discussed further below). Alternatively, the or each cleaning arm 130 may be integral with or secured to the driveshaft 150 to rotate therewith.

Rotation of the cleaning arm 130 directs any collected pollutants (e.g. radially outwards) towards the exterior of the housing 110, e.g. as indicated generally by the arrows labelled MF in Figure 5b.The housing 110 may comprise one or more no-return valves 160, e.g. on/in the inner housing surface 110b, that are aligned radially with the cleaning arms 130, where the pollutants are removed. This enables collection of pollutants directed by the cleaning arm(s) 130. In an embodiment, the or each no-return valve 160 comprises an aperture for receiving the pollutants directed by the cleaning arm 130. The aperture of the or each n-return valve 160 may be larger than of the corresponding pore size of the filter membrane(s) 120a, such that pollutants trapped by the membrane 120a are able to pass through the no-return valves 160. Alternatively, a single no-return valve 160 may be located in the wall of the housing 110.

Where a plurality of pollutant filter units 115 are used, these may comprise filter membranes 120a of different or varying granularity or fine-ness, or pore size. The variation e.g. in pore size may be progressive. For example, the forward-most membrane 120a may be the coarsest, and each following membrane may be finer than the preceding membrane 120a. The coarsest, with the largest pore size, may be substantially 50mm. Each finer membrane 120a may have a smaller pore size than the preceding membrane 120a. Alternatively, the filter membranes 120a may have the same granularity or pore size. The pore size of the filter membrane(s) 120a may be in the range substantially 0.1 µm to 50 mm.

The or each no-return valve 160 may provide a selective fluid communication between the fluid passage 105 and the cavity 111 of the housing, such that, once the pollutants have passed through the or each no-return valve 160 they may be collected in the cavity 111. The or each no-return valve 160 may be actuated by a radially outward fluid flow generated by the cleaning arm(s) 130. Alternatively or additionally, the system 100 may be connectable to a pumping system. The pumping system 400 is configured to transport collected pollutants from or through the no-return valves 160 to the cavity 111 or to a separate storage unit 300 where they can be held until sorting/separating and/or disposal is required (e.g. see Figure 6).

For example, the pollutants directed by the cleaning arm(s) 130 may gather or collect at the inner surface 110b at or near the no-return valve(s) 160, and the pumping system 400 may be configured to provide a suction on the cavity 111 side of the no-return valve(s) 160 to actuate the no-return valves 160 and transport or suck the collected pollutants through the no-return valve(s) 160.

The cleaning arm(s) 130 may comprise any one or more of a brush, a scraping blade or a vortex generator or any other suitable means for directing pollutants out of the housing 110. The cleaning arm 130 may be configured to contact and e.g. sweep over the membrane 120a as it rotates.

In use, e.g. where the turbines 140, 145 are driven by a fluid flow, incoming fluid flow 190 drives/rotates the turbines 140, 145, which in turn causes the cleaning arms 130 to rotate due to the coupling with the gearbox 170 or drive shaft 150. The rate of rotation of the cleaning arms 130 can be controlled by the gearbox 170. This ensures that the cleaning arms 130 rotate at a proportional speed to the rotation of the turbines 140, 145. The rotation rate of the cleaning arms 130 may be selected/adjusted to a rate necessary to prevent excess deposition of material on the filter membranes 120.

In an embodiment, the rotational speed of the cleaning arm(s) 130 is dependent on the gearing ratio of the gearbox 170. The gearing ratio steps down the rotational speed of the cleaning arm(s) 170 from the rotational speed of the turbine 140, 145. In other words, if the turbine 140, 145 rotates at a speed X, and the clearing rate of the system 100 (e.g. related to the amount of pollutants being or expected to be filtered) requires the cleaning arm(s) 130 to rotate at a speed X/3, the gearing ratio from the turbine 140, 145 to the cleaning arm(s) 130 is 3:1, or for every 3 rotations of the turbine 140, 145 the cleaning arm(s) rotate once. The gearing ratio is determined by number of gear teeth on the gears of the gearbox 170 and may be variable, as is known in the art. As the cleaning arm(s) 130 rotates on the same axis (i.e. defined by the driveshaft 150) as the turbine(s) 140, 145, contra gears are needed to move the rotation perpendicular, then back again to the same axis, varying the speed between these steps.

The gearing ratio of the gearbox may be fixed or variable, e.g. variable between ratios, e.g. 1:1, 2:1, 3:1, or 4:1. Where the gear ratio is variable, the gear ratio may be selectable manually by an operator or automatically via a gear selection system (not shown). For example, an automatic gear selection system may comprise one or more pollutant sensors to determine the amount/level of pollution in the incoming fluid flow. If the detected amount/level exceeds a threshold value, the gear ratio may be adjusted to increase the rotation rate of the cleaning arms 130. If the detected amount/level falls below a threshold value, the gear ratio may be adjusted to decrease the rotation rate of the cleaning arms 130.

Pollutants will collect at a rate proportional to the fluid flow rate, e.g. the tidal flow rate. Pollutants will collect on the filter membrane(s) 120a at a rate proportional to the pollutant concentration C in the fluid and the fluid flow rate, e.g. proportional to the tidal flow rate, river flow rate, or speed of movement of the system 100 relative to a body of fluid. The cleaning arm 130 rotation rate can therefore be controlled e.g. by the gearbox 170 to ensure that pollutants e.g. collected on the filter membrane(s) 120a are directed for removal at an appropriate rate (i.e. a rate that avoids/eliminates excess deposition of pollutants on the filter membranes 120a). In an embodiment, the cleaning arm 130 rotation rate is a function of the tidal flow rate and is defined geographically, meaning the cleaning arm 130 rotatation occurs at a rate necessary to prevent excess deposition of material on the filter membranes 120a. For example, Country A may have an expected pollution concentration of Ca and Country B may have an expected pollution concentration of Cb, where Ca = k*Cb (and Ca and Cb are average values over a period of time). Therefore, the cleaning arm 130 rotation rate required for Country A will be k times that for Country B, as the required rotation rate is proportional to the concentration level (for a given flow rate through the system). The concentrations (e.g. Ca and Cb) will require local sampling and then the system 100 can be configured to match the cleaning rate associated with the particular pollutant concentration. The system 100 may also comprise a deflector (not shown) aimed at preventing large physical pollution (such as large pieces of plastic) entering the system 100 (e.g. through the front end 112). This avoids or prevents e.g. large pollutant particles entering the system 100 that could cause blockage or malfunction (e.g. waste that is larger than the aperture of the no-return valves 160).

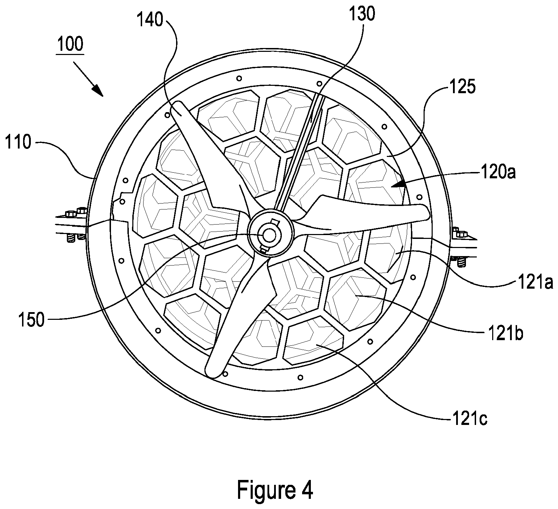

Figure 4 illustrates a front end photographic view of an example embodiment of the system 100. In addition to the features illustrated in the schematic embodiments of Figures 1 to 3, each filter membrane 120a is or comprises an array of smaller membranes or membrane cells 121, 122. In the embodiment shown these membranes or membrane cells 121, 122 are held and/or supported by a support structure 125 at or along the edges of each of the smaller membranes 121, 122 but, in other embodiments no support structure may be necessary.

Figures 5a and 5b illustrate schematic views of a pollutant filter unit 115. The pollutant filter unit 115 comprises a static element 120 (being or comprising a filter membrane 120a). The filter unit 115 further comprises a dynamic element 130 (being or comprising a cleaning arm). The cleaning arm 130 rotates with or about the driveshaft 150, which acts to direct pollutants to the exterior of the unit 115, as is generally indicated by the arrows labelled MF in Figure 5b. The or each cleaning arm 130 may comprise a hub portion 132 that receives the driveshaft 150 and an arm portion 134 that extends away from the hub portion 132. A cleaning portion 136 may be coupled to the arm potion 134. The cleaning portion 136 may be disposed adjacent the filter membrane 120a and be configured to direct the pollutants by moving across the surface of the filter membrane 120a, e.g. by contacting and sweeping over the filter membrane 120a as it rotates. The cleaning arm portion 136 may be or comprise any one or more of a brush, a scraping blade or a vortex generator or any other suitable means for directing pollutants out of the housing 110. In an embodiment, the or each hub portion 132 is connected to the gearbox 170 to control the rotational speed thereof (discussed above). Alternatively, the or each cleaning arm 130 may be integral with or secured to the driveshaft 150 to rotate therewith.

Once the pollutants have passed through the no-return valves 160, they may be collected in the cavity 111. Pollutants can then be transferred to a separation system 600 (described further below with reference to Figure 6) to separate pollutant materials 614 from any biological material 612 also collected (that can be re-introduced to the fluid e.g. the water or sea). Alternatively, pollutants may be transferred directly from the or each no-return valve 160 to the separation system 600. The no-return valve(s) 160 or the cavity 111 may be connectable to the separation system 600 via one or more transfer pipes or fluid conduits 650. For example, the transfer pipe(s) 650 may pass from the no-return valve(s) 160 through the cavity 111 and out to the separation system 600, or the transfer pipe(s) 650 may pass from the cavity 111 and out to the separation system 600. Alternatively or additionally, pollutants may be transferred (from the no-return valves 160 or the cavity 111) to an intermediate storage unit 500 before being transferred to the separation system 600. Pollutants may be transferred to the separation system 600 immediately after being collected by the system 100, or collected pollutants may be stored for a period of time (e.g. stored in the intermediate storage unit 500 or the cavity 111) before being transferred to the separation system 600.

The transfer pipe(s) 650 may further connect the system 100 to the pumping system 400 for pumping the pollutants through the no-return valves 160 and out to the cavity 111, the intermediate storage unit 500 and/or the separation system 600. Where the cavity 111 is not used for storing/collecting pollutants, the cavity 111 may simply be a space to house at least a portion of the transfer pipes 650 and/or any electrical cabling. In this case, the outer surface 110 of the housing may serve as a cowling and may be shaped or configured to reduce any drag from the fluid flow.

The pumping system 400, intermediate storage unit 500 and/or the separation system 600 may be located remotely from the system 100, e.g. on shore or on a marine vessel or structure. The pumping system 400 may be powered by the system 100 directly e.g. via the electrical power output 210 generated from one or generators, or indirectly e.g. via the electrical power storage unit 200 used to store the electrical power output 210. Alternatively, the pumping system 400 may be powered by the external power source 300.

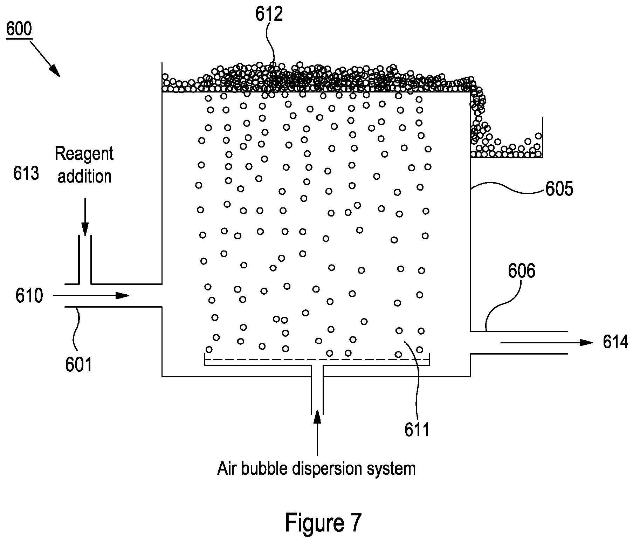

Figure 7 illustrates a schematic of an example froth flotation separation system 600. Froth flotation is most commonly used in separation of minerals in water (as illustrated), but can be implemented to separate biological and non-biological materials. In a froth flotation process, materials are separated into distinct layers with the use of a non-toxic biological detergent such as a fatty acid. Each distinct layer can then be skimmed from the group, and either stored or returned to the ocean (depending on whether the layer contains biological or pollutant material).

The separation system 600 may be arranged downstream of the no-return valves 160 and/or cavity 111 (and, where present, the intermediate storage unit 500), such that after the pollutants are directed to and pass through the no-return valves 160 they may be transported to a separation system 600. In an embodiment, the pollutants may be transported directly from the no-return values 160 to the separation system 600, e.g. by the pumping system 400 and via the pipes or fluid conduits 650.

In the illustrated example separation system 600, the mixture 610 (e.g. pollutant materials 614 and biological material 612 in solution) enters into a housing 605 of the system 600 via an inlet 601. For example, the no-return valves 160 or the cavity 111 may be connectable to the inlet 601 by the transfer pipes 650. The reagent 613 (such as fatty acid) is combined in with the mixture 610 in the inlet 601 before entering the housing 605. The mixture 610 is then separated into distinct layers by the use of dissolved or dispersed air 611. Biological materials float efficiently and so commonly form the top layer(s) to be skimmed (e.g. layer 612). The suspended pollutant material 614 can be drained through outlet 606 and disposed of or stored for further sorting/recycling. This separation can be performed on the pollutant solution collected from the no-return valves 160 and/or in the cavity 111, either as part of the system 100 or separately and later,

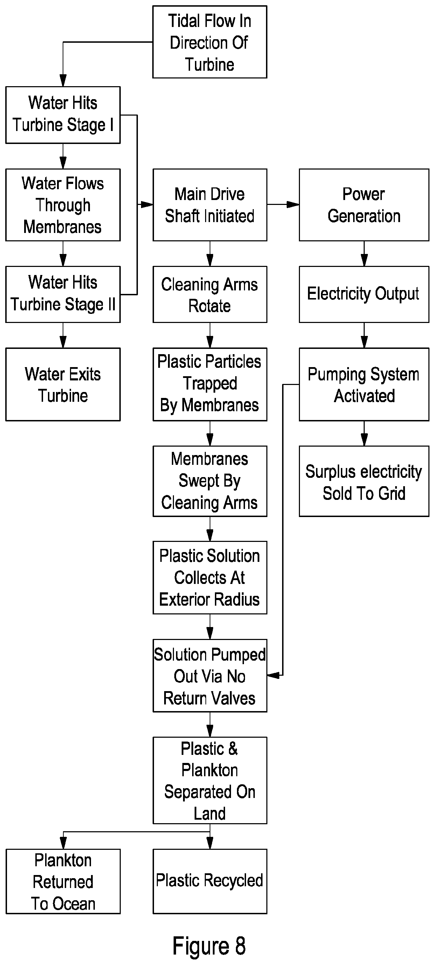

Figure 8 illustrates a workflow map of an example embodiment. This particular example is configured to reduce plastic pollution, and the collected waste is separated on land before returning the biological material (e.g. plankton) to the ocean.

The system 100 is positioned to receive a fluid flow or tidal flow such that flow 190 enters the housing 110 and rotates the front turbine 140. The flow 190 will pass through the housing 110 and the one or more filtration units 115 (where pollutant particles will be trapped), and cause rear turbine 145 to rotate before exiting the system 100 as de-polluted (or reduced pollution) flow 195.

The rotation of the turbines 140, 145 rotates (or initiates) the driveshaft 150. The driveshaft 150 is coupled to a generator, such that rotation of the driveshaft 150 generates electricity or electrical power output 210. This electricity or electrical power output is used power a pumping system 400. Any surplus electricity or electrical power can be sold to the grid. Alternatively, the excess can be stored e.g. in an electrical power storage unit 200 to drive the system 100 at a later time.

Rotation of the driveshaft 150 also initiates rotation of the dynamic element or cleaning arm 130 of the filtration unit 115. Polluted fluid flow will have passed through the static element (filter membrane 120a) 120 and pollutants "trapped". Rotation of the dynamic element 130 across the face of the static element 120 directs the pollutants to the extreme edge of the housing 110.

The pumping system 400 then extracts the pollutants to a separation system or storage 600, where the pollutants can be separated from any collected biological material and dealt with accordingly. The biological material can then be returned to the ocean if appropriate.

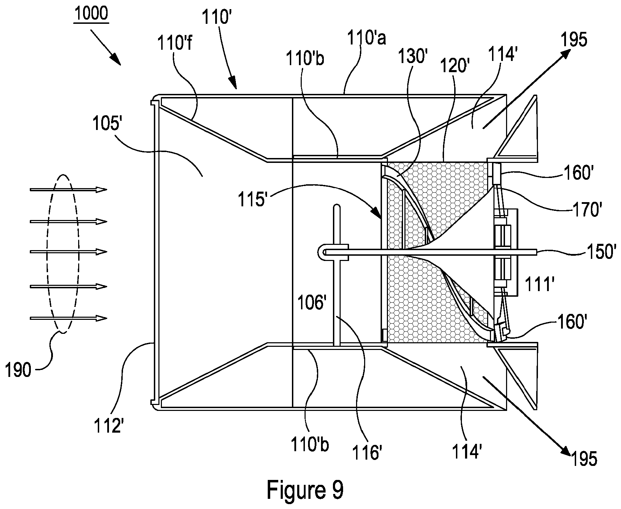

Figure 9 shows a system 1000 according to alternative embodiment of the invention. System 1000 has many features in common with the system 100 shown in figures 1 to 4 and described above and similar features are labelled with the same reference numerals. System 1000 may be particularly suited to attachment to a marine vessel, such that the system 1000 is moved through the water to be filtered by the marine vessel.

The system 1000 comprises a housing 110' configured to receive an incoming fluid flow 190, and output a substantially de-polluted fluid flow 195. The housing 110' comprises a filter unit 115' with a static filter element 120' (including one or more filter membranes 120a') to trap pollutants contained in the fluid flowing therethrough, and a dynamic filter element 130' (being or comprising a cleaning arm) to direct the pollutants trapped by the static filter element 120' for removal from the housing 110'. The filter unit 115' is disposed within the filtration chamber 106' of the housing 110' and coupled to the driveshaft 150'. In this embodiment, the incoming fluid flow 190 enters the housing 110 through an inlet 112' at a front end of the housing 110' and exits the housing 110' through an outlet 114' in the side of the housing 110'. As such, unlike system 100, the fluid or flow path 106 through the housing 110' is not straight.

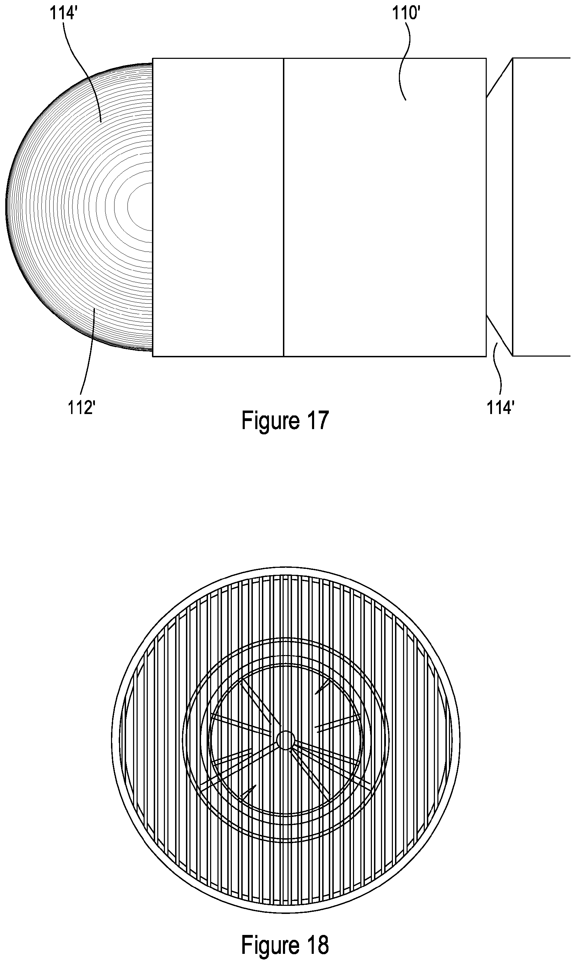

The outlet 114' may comprise an opening in a sidewall of the filtration chamber 106. The housing 110' may comprise a plurality of outlets 114' arranged radially around the housing 110'. Alternatively, the outlet 114' may be an annular outlet that extends around the housing 110', as shown in figure 17.

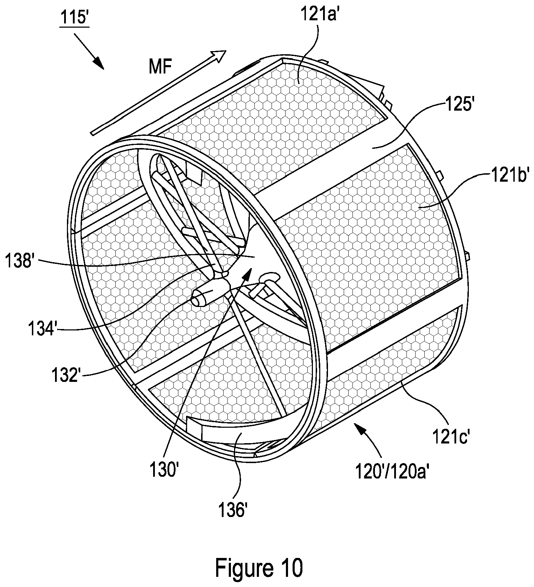

Figure 10 illustrates a schematic view of a pollutant filter unit 115'. The filter unit 115' is a substantially cylindrical unit to match the substantially cylindrical filtration chamber 106' defined by the interior space of the housing 110'. The static filter element 120' is a substantially hollow cylindrical element 120' comprising one or more filter membranes 120a' (such as membrane cells 121a', 121b', 121c'). In this way, the static filter element 120' forms a filter membrane ring.

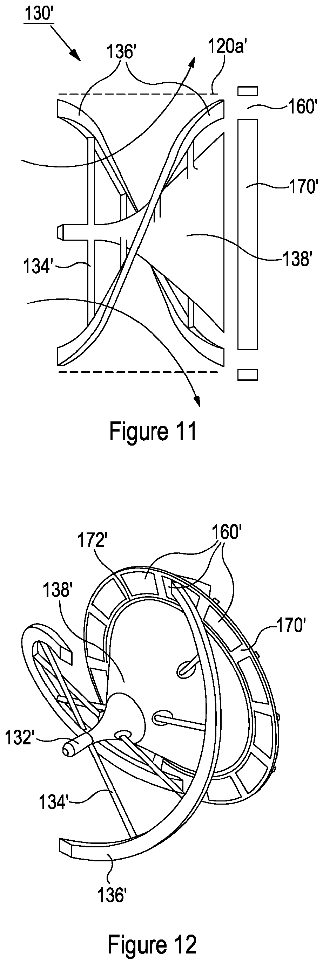

The filter unit 115 is positioned within the filtration chamber 106' such that the filter membrane 120a' ring is aligned radially with the outlet 114' or sidewall opening and extends at least partially across the outlet 114' or sidewall opening. This ensures that the fluid flows though the filter membrane 120a' on its passage to the outlet 114', as indicated by the arrows in figure 11. To reduce the resistance of the flow path through the chamber 106' and/or turbulence within the chamber 106, the dynamic filter element 130' further comprises a flow directing element 138' to direct the flow through the filter membrane 120a' (see figure 11). The flow directing element 138' comprises a surface inclined with respect to the driveshaft axis to deflect the fluid flow outwards from the driveshaft axis or center of the chamber 106'. Where there are a plurality of outlets 114' around the housing 110' or an annular outlet, the flow directing element may be substantially conical, as shown in figures 10-11.

The or each filter membrane 120a' or membrane cell 121a', 121b', 121c' may be supported by a frame structure 125'. The static filter element 120' extends around the dynamic filter element 130' such that the filter membrane(s) 120a' is/are arranged radially with respect to the cleaning arm(s) of the dynamic filter element 130'.

The or each cleaning arm 130' comprises one or more helical cleaning portions 136, as shown in figure 10 and in more detail in figure 11. The helical cleaning portion(s) 136 rotates with the cleaning arm(s) 130' with/about the driveshaft 150, such that pollutants trapped on the filter membrane 120a' are directed/moved across the surface of the filter membrane 120a' towards the edge or end of the filter unit 115, as is generally indicated by the arrow labelled MF in figure 10. The helical cleaning portion 136' provides a velocity component of the material flow across the filter membrane that is parallel to the driveshaft 150' or rotation axis of the cleaning arm 130' (or longitudinal axis of the housing 110').

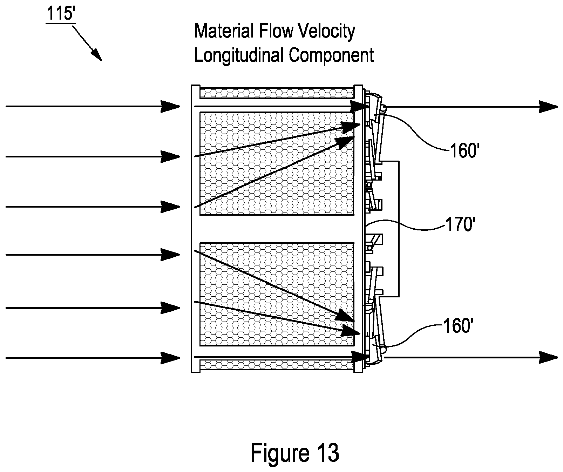

Figure 13 illustrates the pollutant material flow (arrows) through the filter unit 115'. Pollutants that are initially suspended in the fluid are directed upwards towards the filter membrane 120a' by the flow directing element 138'. Rotation of the cleaning arm 130' directs any collected pollutants towards a rear wall 170' of the chamber 106'. The dynamic filter element 130' may be disposed adjacent the rear wall 170. The rear wall 170' may comprise a track 172' on which the dynamic filter element 130' runs (see figure 12).

The one or more apertures 160' or valves 160' (e.g. no-return valves) are disposed in/on the rear wall 170' for receiving the pollutants directed by the cleaning arm 130, as shown in figures 10-12. A series of apertures 160' or valves 160 may be arranged around the perimeter of the rear wall 170' and aligned with the cleaning portion 136' as shown in figure 12. As the cleaning member 136' rotates, each apertures 160' or valves 160 of the series receives sequentially an amount of pollutants directed from the filter membrane 120a' by the cleaning member 136'. Each apertures 160' or valves 160 may receive an amount of pollutants periodically, e.g. when the or each cleaning member 136' passes a respective apertures 160' or valves 160 with each revolution. Alternatively, an amount of pollutant will be deposited (sequentially and/or periodically) over, on or near each aperture 160' or valve 160 with each rotation of the cleaning member 136'.

The apertures 160' or valves 160 lead to a collection chamber or cavity 111' behind the rear wall 170'. Once the pollutants have passed through the apertures 160' or valves 160, they may be collected and/or stored in the collection chamber 111' until a time when they are to be removed or transferred, e.g. to a storage unit and/or processing stage. The system 1000 may be connectable to the pumping system 400, intermediate storage unit 500 and/or the separation system 600 as previously described in relation to system 100. The pumping system 400 may be configured to pump the pollutants from the collection chamber 111' to the intermediate storage unit 500 and/or to the separation system 600. The pumping system 400 may be connectable to the collection chamber 111' or directly to the apertures 160' or valves 160' via the one or more pipes 650, as previously described.

The or each valve 160' may be actuated by the rearward fluid flow generated by the motion of the cleaning arm(s) 130'. Alternatively or additionally, the pollutants directed by the cleaning arm(s) 130' may gather or collect at the rear wall 170' at or near the valve(s) 160, and the valves 160 may be actuated by a suction on the cavity 111 side of the valve(s) 160' provided by the pumping system 400 that pumps or sucks the pollutants through the valves 160'.

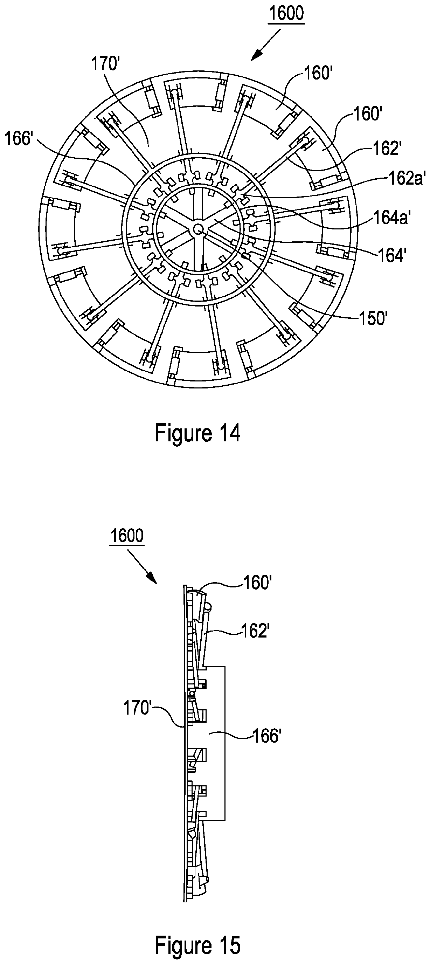

Alternatively or additionally, actuation of the or each valve 160' may be synchronized with the rotation of the cleaning arm 130'. For example, the or each valve 160' may be configured to open or actuate when the cleaning member 136' passes a respective valve 160'. Figures 14 and 15 show an example valve actuator assembly 1100 configured to actuate each the or each valve 160' in response to the rotation of the cleaning arm 130'. The assembly 1100 comprises a cam 164' configured to rotate about the driveshaft axis with the cleaning arm 130'. The cam 164' may be coupled to the drive shaft 150' and/or any part of the dynamic filter element 130' that rotates with the cleaning arm 130. The assembly 1100 further comprises one or more actuating members 162' or arms 162' (e.g. an actuator member for each valve 160'). The actuating arms 162' are arranged and configured to transfer an actuating force from the cam 164' to a respective valve 160' to actuate the valve 160'.

The or each actuating arm 162' is actuated by a cam surface (not shown) of the cam 164'. The cam surface has a profile (e.g. one or more projections, or depressions) configured to actuate the actuating arm 162' when the cleaning member 136' is aligned with a respective valve 160'. The cam surface may be axial surface or a radial surface of the cam 164'. In the example shown, each actuating arm 162' is coupled at one end to a respective valve 160' and the other end is arranged at or near the cam surface to receive the actuating force from the cam surface upon rotation of the cam 164'. For example, the actuator arm 162' may be or comprise a cam follower configured to run along the cam surface to actuate the respective valve. The or each actuating arm 162' is coupled to the rear wall 170'. In the example shown, the or each actuating arm is pivotably coupled to rear wall at a coupling 162a'. Actuation of the actuating arm 162' by the cam surface pivots the arm about the coupling 162a' to apply an actuating force to the valve 160'. The cam surface and the coupling 162a' may be configured to pivot the actuating arm 162' away from the rear wall 170', as shown in figure 15. Alternatively, the cam surface and the coupling 162a' may be configured to pivot the actuating arm in the plane of the rear wall 170' (e.g. to one side, in the plane of the rear wall 170').

The assembly 1100 may further comprise a cover 166' to seal or house the cam 164' and at least a portion of the actuating arms 162' (see figure 15).

The rear wall 170' may be integral with the housing 110' or chamber 106'. Alternatively, the rear wall may be part of the assembly 1100 and/or the filter unit 115', either of which may be removable from the housing 110'. In this case, when installed into the housing 110', the rear wall 170' may be configured to seal against the chamber wall(s) 110'b of the housing 110' to prevent fluid leaking into the collection chamber 111' from around the rear wall 170'.

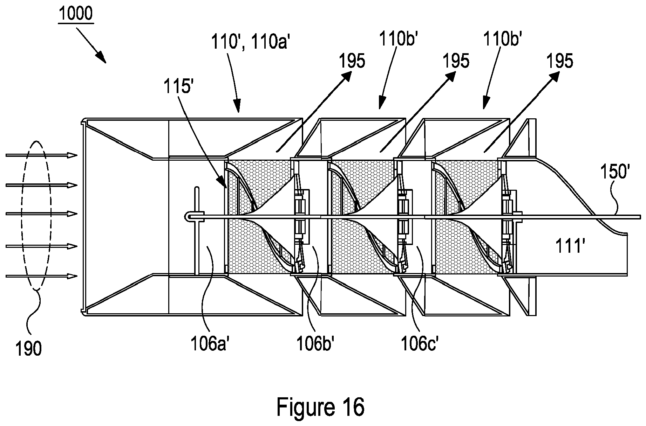

Although only one filtration chamber 106' is shown in the example or figure 9, in another embodiment, the system 1000 may comprise a series of filtration chambers 106a', 106b', 106c', as shown in figure 16. In this case, the valve(s) 160' of the first filtration chamber may lead into a second filtration chamber, and so on. The valve(s) 160' of the first filtration chamber may be or comprise the inlet(s) 112' of the second filtration chamber, and so on. In this way, pollutants may pass through several filtration chambers before reaching the collection chamber 111'. The housing 110' may comprise each filtration chamber 106' and the collection chamber 111'. Alternatively, the system 1000 may comprise a modular housing including separate modules 110a', 110b', 110c' for each separate filtration chamber 106a', 106b', 106c'. Each module 110a', 110b', 110c' may be connectable to each other and interchangeable. In this way, the system 1000 may be configurable.

The driveshaft 150' of the system 1000 may be driven by a drive system (not shown), e.g. including a motor. The drive system may be powered by an external power source, e.g. where the system 1000 is attached to a marine vessel, power may be provided by the marine vessel. It will be appreciated that the drive system may include any means capable of rotating the driveshaft known in the art. Alternatively or additionally, although not shown, the system 1000 may also include one or more turbines to drive the driveshaft 150' and the dynamic element 130' in a similar way to the system 100 shown in figure 1-4. For example, the or each turbine may be located in the first (front) chamber 106a' upstream of the filter unit 115'.

Figure 17 and 18 shows an example deflector element 112d that may be coupled to the housing 110', 110 in front of the inlet 112', 112 to inhibit objects larger than a width of the valves 160', 160 from entering the chamber 106', 106. The deflector 112d may comprise a grill or a plurality of ribs extending across the inlet 112', 112. The grill or the ribs are configured to define a plurality of openings having a width equal to or less than the width the of the valves 160', 160.

From reading the present disclosure, other variations and modifications will be apparent to the skilled person. Such variations and modifications may involve equivalent and other features which are already known in the art and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may instead or also be provided in combination in a single embodiment and/or be interchangeable. Conversely, various features which are, for brevity, described in the context of a single embodiment may also be provided separately or in any suitable sub-combination. Features described in connection with a device or system may have corresponding feature definable with respect to a method, and vice versa. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, and reference signs in the claims shall not be construed as limiting the scope of the claims.

## Claims

1. A system (100) for reducing water pollution, comprising:
a housing (110) configured to receive an incoming fluid flow (190) containing pollutants from a water environment, and output a de-polluted fluid flow (195) to the water environment;
one or more pollutant filter units (115) disposed within the housing, each comprising: one or more dynamic elements (130), optionally or preferably, one or more dynamic filter elements, configured to direct pollutants for removal from the housing; and
at least one turbine (140) configured to drive the dynamic element, wherein the turbine is actuated by the fluid flow into the housing and/or by a power supply,
**characterized in that** the at least one turbine is a pair of contra-rotating turbines (140, 145).

2. The system of claim 1, wherein:
one or each of the one or more dynamic elements comprises a cleaning member (136) or cleaning arm and,
optionally or preferably, wherein each cleaning arm comprises at least one of:
(i) one or more brushes;
(ii) one or more scraping blades; and/or
(iii) one or more vortex generators.

3. The system as claimed in claim 1, further comprising:
a driveshaft coupling the at least one turbine and the one or more dynamic elements and/or configured to move the one or more dynamic filter elements; and,
optionally or preferably, the one or more dynamic elements configured to rotate with or about the driveshaft (150); and
optionally or preferably, wherein the one or more dynamic elements are rotatably coupled to the driveshaft and/or configured to rotate with or about the driveshaft.

4. The system of any preceding claim, further comprising one or more static elements, optionally or preferably, one or more static filter elements (120) configured to inhibit output of pollutants from the housing and/or entrap pollutants flowing through the filter unit(s); and, optionally or preferably,
wherein the or each dynamic element is configured to move over or across a surface of the static filter element(s) and/or to direct pollutants collected by the or each static element for removal from the housing, optionally or preferably, by sweeping pollutants inhibited or entrapped by the static filter element(s) in one or more directions across a surface of the static filter element.

5. The system of claim 4, wherein:
each of the one or more static elements comprises a filter membrane (120a); and/or
the dynamic and static elements are positioned adjacent to one another and, optionally or preferably, wherein the one or more static filter elements are arranged axially with respect to the one or more respective dynamic filter elements

6. The system as claimed in any preceding claim, wherein the housing further comprises a series of apertures or pollution outlets configured to receive collected pollutants directed by the dynamic element; and, optionally or preferably,
wherein the series of apertures (160) or pollutant outlets are arranged around the housing, aligned radially with the dynamic element.

7. The system of claim 6, wherein the dynamic filter element is configured to move to direct pollutants entrapped by the static filter element(s) towards the pollutant outlets; and, optionally or preferably, wherein each pollutant outlet is disposed in or at a wall (170) of the housing adjacent the dynamic filter element and, optionally or preferably, aligned radially with the dynamic filter element; and, optionally or preferably, further comprising:
a pumping system (400), comprising a plurality of pipes (650) connected to the apertures, for transporting the pollutants to external storage; and/or
a pumping system connected to the or each aperture for transporting the pollutants out of the housing, optionally or preferably, to an external storage and/or a sorting system; and/or
wherein the series of apertures are no-return valves

8. The system of any preceding claim, wherein the housing further comprises:
an inlet (112) to receive the incoming fluid flow;
an outlet (114) to output the de-polluted fluid flow; and
a fluid flow path between the inlet and the outlet, wherein the pollutant filter unit is disposed in the flow path; and, optionally or preferably
wherein the static filter element is arranged substantially across the outlet.

9. The system of any of claims 4 to 8 when dependent from claim 3, wherein the direction of fluid flow through the housing and/or the static filter element is substantially parallel to the driveshaft axis

10. The system of any of claims 4 to 8 when dependent from claim 3, wherein the direction of flow through the static filter element is substantially perpendicular to the driveshaft axis, or at an angle between substantially 45 degrees to 90 degrees from the driveshaft axis; and, optionally or preferably
wherein the static filter element is arranged substantially in or on a sidewall of the housing; and/or
when dependent from claim 8, wherein the housing comprises a sidewall opening leading to the outlet, and the static filter element extends at least partially across the opening

11. The system of claim 10, wherein the pollutant filter unit further comprises a flow directing element (138) configured to direct at least a portion of the incoming fluid flow towards the static filter element, and optionally or preferably, wherein the flow directing element comprises a flow directing surface inclined with respect to the driveshaft axis; and, optionally or preferably, wherein the flow directing surface is substantially conical; and, optionally or preferably, the system further comprising:
a deflector coupled to the front end of the housing for preventing large objects entering the system, and optionally or preferably, wherein the deflector element (112d) is configured to inhibit objects larger than a width of the pollutant outlets from entering the chamber.

12. The system as claimed in any of claims 3-11, when dependent from claim 3, further comprising: a generator coupled to the driveshaft, such that rotation of the turbine generates electricity; and/or wherein the turbine is actuated by the fluid flow into the housing and/or by a power supply; and, optionally or preferably
when dependent on claim 7, wherein the generated electricity is used to power the pumping system

13. The system as claimed in any of claims 3-12, when dependent from claim 3, wherein the contra-rotating turbines are coupled to either end of the driveshaft; and optionally or preferably,
the system further comprising a gearing system coupled to the driveshaft, configured to control the rate of movement of the dynamic element, optionally or preferably, proportionally to the rate of rotation of the at least one turbine; and/or
wherein the system is configured to couple to a marine vessel.

14. A method of reducing marine pollution, comprising the steps of:
providing or using a system (100) as claimed in any one of claims 1 to 13; and optionally or preferably, one or more of:
providing a storage unit (300) to store the collected pollutants;
periodically removing, emptying and re-attaching the storage unit; and/or
coupling the system to a fixed marine structure, such as a pipeline, floating platform or pier, or a marine vessel, such as a ship; and/or, further comprising the steps of:
providing an incoming fluid flow (190) containing pollutants from a water environment;
filtering pollutants from the fluid flow;
directing the filtered pollutants for removal from the system; and
outputting a de-polluted fluid flow (195) to the water environment; and/or further comprising:
sorting the collected pollutants from the storage system into biological (612) and non-biological material (614); and optionally or preferably
returning the biological material to the water environment, wherein the water environment is the ocean.

## Patentansprüche

1. System (100) zur Verringerung der Wasserverschmutzung, umfassend:
ein Gehäuse (110), das konfiguriert ist, um einen ankommenden Fluidstrom (190), der Verunreinigungen aus einer Wasserumgebung enthält, aufzunehmen und einen gereinigten Fluidstrom (195) an die Wasserumgebung auszugeben;
eine oder mehrere Verunreinigungsfiltereinheiten (115), die in dem Gehäuse angeordnet sind, jeweils umfassend: ein oder mehrere dynamische Elemente (130),
optional oder vorzugsweise ein oder mehrere dynamische Filterelemente, die konfiguriert sind, um Verunreinigungen zur Entfernung aus dem Gehäuse zu leiten; und
mindestens eine Turbine (140), die konfiguriert ist, um das dynamische Element anzutreiben, wobei die Turbine durch den Fluidstrom in das Gehäuse und/oder durch eine Energieversorgung angetrieben wird,
**dadurch gekennzeichnet, dass** die mindestens eine Turbine ein Paar gegenläufiger Turbinen (140, 145) ist.

2. System nach Anspruch 1, wobei:
eines oder jedes des einen oder der mehreren dynamischen Elemente ein Reinigungselement (136) oder einen Reinigungsarm umfasst und optional oder vorzugsweise, wobei jeder Reinigungsarm mindestens eines der Folgenden umfasst:
(i) eine oder mehrere Bürsten;
(ii) ein oder mehrere Schabemesser; und/oder
(iii) einen oder mehrere Wirbelerzeuger.

3. System nach Anspruch 1, weiter umfassend:
eine Antriebswelle, die die mindestens eine Turbine und das eine oder die mehreren dynamischen Elemente koppelt und/oder konfiguriert ist, um das eine oder die mehreren dynamischen Filterelemente zu bewegen; und,
optional oder vorzugsweise das eine oder die mehreren dynamischen Elemente, die konfiguriert sind, um sich mit oder um die Antriebswelle (150) zu drehen; und
optional oder vorzugsweise, wobei das eine oder die mehreren dynamischen Elemente drehbar mit der Antriebswelle gekoppelt und/oder konfiguriert sind, um sich mit oder um die Antriebswelle zu drehen.

4. System nach einem der vorstehenden Ansprüche, weiter umfassend ein oder mehrere statische Elemente, optional oder vorzugsweise ein oder mehrere statische Filterelemente (120), die konfiguriert sind, um den Austritt von Verunreinigungen aus dem Gehäuse zu verhindern und/oder Verunreinigungen, die durch die Filtereinheit(en) strömen, einzufangen; und optional oder vorzugsweise,
wobei das oder jedes dynamische Element konfiguriert ist, um sich über oder quer zu einer Oberfläche des statischen Filterelements bzw. der statischen Filterelemente zu bewegen und/oder Verunreinigungen, die von dem oder jedem statischen Element aufgefangen werden, zur Entfernung aus dem Gehäuse zu leiten, optional oder vorzugsweise, indem es Verunreinigungen, die von dem statischen Filterelement bzw. den statischen Filterelementen zurückgehalten oder eingefangen werden, in einer oder mehreren Richtungen über eine Oberfläche des statischen Filterelements hinwegfegt.

5. System nach Anspruch 4, wobei:
jedes des einen oder der mehreren statischen Elemente eine Filtermembran (120a) umfasst; und/oder
die dynamischen und die statischen Elemente nebeneinander angeordnet sind und, optional oder vorzugsweise, wobei das eine oder die mehreren statischen Filterelemente axial in Bezug auf das eine oder die mehreren jeweiligen dynamischen Filterelemente angeordnet sind.

6. System nach einem der vorstehenden Ansprüche, wobei das Gehäuse weiter eine Reihe von Öffnungen oder Verunreinigungsauslässen umfasst, die konfiguriert sind, um gesammelte Verunreinigungen aufzunehmen, die von dem dynamischen Element geleitet werden; und, optional oder vorzugsweise,
wobei die Reihe von Öffnungen (160) oder Verunreinigungsauslässen um das Gehäuse herum, radial auf das dynamische Element ausgerichtet, angeordnet ist.

7. System nach Anspruch 6, wobei das dynamische Filterelement konfiguriert ist, um sich zu bewegen, um Verunreinigungen, die von dem/den statischen Filterelement(en) eingefangen werden, zu den Verunreinigungsauslässen zu leiten; und, optional oder vorzugsweise, wobei jeder Verunreinigungsauslass in oder an einer Wand (170) des Gehäuses angrenzend an das dynamische Filterelement angeordnet ist und optional oder vorzugsweise radial mit dem dynamischen Filterelement ausgerichtet ist; und optional oder vorzugsweise weiter umfassend:
ein Pumpensystem (400), das eine Vielzahl von Rohren (650) umfasst, die mit den Öffnungen verbunden sind, um die Verunreinigungen zu einem externen Lager zu transportieren; und/oder
ein mit der oder den Öffnungen verbundenes Pumpensystem zum Abtransport der Verunreinigungen aus dem Gehäuse, optional oder vorzugsweise in ein externes Lager und/oder ein Sortiersystem; und/oder
wobei die Reihe von Öffnungen Rückschlagventile sind.

8. System nach einem der vorstehenden Ansprüche, wobei das Gehäuse weiter umfasst:
einen Einlass (112) zum Aufnehmen des ankommenden Fluidstroms;
einen Auslass (114) zum Ausgeben des gereinigten Fluidstroms; und
einen Fluidströmungsweg zwischen dem Einlass und dem Auslass, wobei die Verunreinigungsfiltereinheit im Strömungsweg angeordnet ist; und, optional oder vorzugsweise
wobei das statische Filterelement im Wesentlichen quer zum Auslass angeordnet ist.

9. System nach einem der Ansprüche 4 bis 8, wenn abhängig von Anspruch 3, wobei die Richtung des Fluidstroms durch das Gehäuse und/oder das statische Filterelement im Wesentlichen parallel zur Achse der Antriebswelle verläuft.

10. System nach einem der Ansprüche 4 bis 8, wenn abhängig von Anspruch 3, wobei die Strömungsrichtung durch das statische Filterelement im Wesentlichen senkrecht zur Achse der Antriebswelle oder in einem Winkel zwischen im Wesentlichen 45 Grad und 90 Grad von der Achse der Antriebswelle verläuft; und, optional oder vorzugsweise
wobei das statische Filterelement im Wesentlichen in oder an einer Seitenwand des Gehäuses angeordnet ist; und/oder
wenn abhängig von Anspruch 8, wobei das Gehäuse eine Seitenwandöffnung umfasst, die zum Auslass führt, und das statische Filterelement sich zumindest teilweise über die Öffnung erstreckt.

11. System nach Anspruch 10, wobei die Verunreinigungsfiltereinheit weiter ein strömungsleitendes Element (138) umfasst, das konfiguriert ist, um zumindest einen Teil des ankommenden Fluidstroms zu dem statischen Filterelement zu leiten, und optional oder vorzugsweise, wobei das strömungsleitende Element eine strömungsleitende Oberfläche umfasst, die in Bezug auf die Achse der Antriebswelle geneigt ist; und optional oder vorzugsweise, wobei die strömungsleitende Oberfläche im Wesentlichen konisch ist; und, optional oder vorzugsweise, das System weiter umfasst:
ein Ablenkblech, das mit dem vorderen Ende des Gehäuses gekoppelt ist, um zu verhindern, dass große Gegenstände in das System eindringen, und optional oder vorzugsweise, wobei das Ablenkelement (112d) konfiguriert ist, um das Eindringen von Gegenständen, die größer als eine Breite der Verunreinigungsauslässe sind, in die Kammer zu verhindern.

12. System nach einem der Ansprüche 3-11, wenn abhängig von Anspruch 3,
weiter umfassend: einen mit der Antriebswelle gekoppelten Generator,
so dass die Rotation der Turbine elektrischen Strom erzeugt; und/oder wobei die Turbine durch den Fluidstrom in das Gehäuse und/oder durch eine Energieversorgung angetrieben wird; und optional oder vorzugsweise
wenn abhängig von Anspruch 7, wobei der erzeugte elektrische Strom zum Betrieb des Pumpensystems verwendet wird.

13. System nach einem der Ansprüche 3-12, wenn abhängig von Anspruch 3,
wobei die gegenläufigen Turbinen mit beiden Enden der Antriebswelle gekoppelt sind; und optional oder vorzugsweise,
das System weiter ein mit der Antriebswelle gekoppeltes Getriebesystem umfasst, das so konfiguriert ist, dass es die Bewegungsgeschwindigkeit des dynamischen Elements, optional oder vorzugsweise proportional zur Rotationsgeschwindigkeit der mindestens einen Turbine, steuert; und/oder
wobei das System konfiguriert ist, um an ein Wasserfahrzeug gekoppelt zu werden.

14. Verfahren zur Verringerung der Meeresverschmutzung, umfassend die folgenden Schritte:
Bereitstellen oder Verwenden eines Systems (100) nach einem der Ansprüche 1 bis 13; und optional oder vorzugsweise eines oder mehrere von:
Bereitstellen einer Speichereinheit (300) zum Speichern der gesammelten Verunreinigungen;
regelmäßiges Entfernen, Entleeren und Wiederanbringen der Speichereinheit; und/oder
Koppeln des Systems mit einer festen maritimen Struktur, wie z.B. einer Pipeline, einer schwimmenden Plattform oder einem Pier, oder einem Seeschiff, wie z.B. einem Schiff; und/oder, weiter umfassend die Schritte:
Bereitstellen eines ankommenden Fluidstroms (190), der Verunreinigungen aus einer Wasserumgebung enthält;
Filtern von Verunreinigungen aus dem Fluidstrom;
Leiten der gefilterten Verunreinigungen zur Entfernung aus dem System; und
Ausgeben eines gereinigten Fluidstroms (195) an die Wasserumgebung; und/oder weiter umfassend:
Sortieren der gesammelten Verunreinigungen aus dem Lagersystem in biologisches (612) und nicht-biologisches Material (614); und optional oder vorzugsweise
Rückführen des biologischen Materials in die Wasserumgebung, wobei die Wasserumgebung der Ozean ist.

## Revendications

1. Système (100) destiné à réduire la pollution des eaux, comprenant :
un boîtier (110) configuré pour recevoir un écoulement de fluide entrant (190) contenant des polluants provenant d'un environnement aquatique, et émettre en sortie un écoulement de fluide dépollué (195) vers l'environnement aquatique ;
une ou plusieurs unités de filtrage de polluants (115) disposées à l'intérieur du boîtier, comprenant chacune : un ou plusieurs éléments dynamiques (130),
facultativement ou de préférence, un ou plusieurs éléments filtrants dynamiques, configurés pour diriger les polluants pour les enlever du boîtier ; et
au moins une turbine (140) configurée pour entraîner l'élément dynamique, dans lequel la turbine est actionnée par l'écoulement de fluide dans le boîtier et/ou par une alimentation électrique,
**caractérisé en ce que** l'au moins une turbine est une paire de turbines contrarotatives (140, 145).

2. Système selon la revendication 1, dans lequel :
un ou chacun de l'un ou plusieurs éléments dynamiques comprend un élément de nettoyage (136) ou un bras de nettoyage et, facultativement ou de préférence, dans lequel chaque bras de nettoyage comprend au moins un élément parmi :
(i) une ou plusieurs brosses ;
(ii) une ou plusieurs lames de raclage ; et/ou
(iii) un ou plusieurs générateurs de tourbillons.

3. Système selon la revendication 1, comprenant en outre :
un arbre d'entraînement couplant l'au moins une turbine et les un ou plusieurs éléments dynamiques et/ou configuré pour déplacer les un ou plusieurs éléments filtrants dynamiques ; et,
facultativement ou de préférence, les un ou plusieurs éléments dynamiques configurés pour tourner avec l'arbre d'entraînement (150) ou autour de celui-ci ; et
facultativement ou de préférence, dans lequel les un ou plusieurs éléments dynamiques sont couplés à l'arbre d'entraînement de manière rotative et/ou configurés pour tourner avec l'arbre d'entraînement ou autour de celui-ci.

4. Système selon une quelconque revendication précédente, comprenant en outre un ou plusieurs éléments statiques, facultativement ou de préférence, un ou plusieurs éléments filtrants statiques (120) configurés pour bloquer une émission en sortie de polluants en dehors du boîtier et/ou piéger les polluants s'écoulant à travers l'(les) unité(s) de filtrage ; et, facultativement ou de préférence,
dans lequel le ou chaque élément dynamique est configuré pour se déplacer sur ou à travers une surface de l'(les) élément(s) filtrant(s) statique(s) et/ou pour diriger les polluants collectés par le ou chaque élément statique pour les enlever du boîtier, facultativement ou de préférence, en balayant les polluants bloqués ou piégés par l'(les) élément(s) filtrant(s) statique(s) dans une ou plusieurs directions à travers une surface de l'élément filtrant statique.

5. Système selon la revendication 4, dans lequel :
chacun de l'un ou plusieurs éléments statiques comprend une membrane filtrante (120a) ; et/ou
les éléments dynamiques et statiques sont positionnés de manière adjacente les uns aux autres et, facultativement ou de préférence, dans lequel les un ou plusieurs éléments filtrants statiques sont agencés axialement par rapport aux un ou plusieurs éléments filtrants dynamiques respectifs.

6. Système selon une quelconque revendication précédente, dans lequel le boîtier comprend en outre une série d'ouvertures ou sorties de pollution configurées pour recevoir les polluants collectés dirigés par l'élément dynamique ; et, facultativement ou de préférence,
dans lequel la série d'ouvertures (160) ou sorties de polluants sont agencées autour du boîtier, alignées radialement avec l'élément dynamique.

7. Système selon la revendication 6, dans lequel l'élément filtrant dynamique est configuré pour se déplacer pour diriger les polluants piégés par l'(les) élément(s) filtrant(s) statique(s) vers les sorties de polluants ; et, facultativement ou de préférence, dans lequel chaque sortie de polluants est disposée dans ou au niveau d'une paroi (170) du boîtier adjacente à l'élément filtrant dynamique et, facultativement ou de préférence, alignée radialement avec l'élément filtrant dynamique ; et, facultativement ou de préférence, comprenant en outre :
un système de pompage (400), comprenant une pluralité de tuyaux (650) reliés aux lumières, pour transporter les polluants vers un stockage externe ; et/ou
un système de pompage relié à la ou chaque ouverture pour transporter les polluants en dehors du boîtier, facultativement ou de préférence, vers un stockage externe et/ou un système de triage ; et/ou
dans lequel la série d'ouvertures sont des clapets antiretour.

8. Système selon l'une quelconque des revendications précédentes, dans lequel le boîtier comprend en outre :
une entrée (112) pour recevoir l'écoulement de fluide entrant ;
une sortie (114) pour émettre en sortie l'écoulement de fluide dépollué ; et
un chemin d'écoulement de fluide entre l'entrée et la sortie, dans lequel l'unité de filtrage de polluants est disposée dans le chemin d'écoulement ; et, facultativement ou de préférence
dans lequel l'élément filtrant statique est agencé sensiblement à travers la sortie.

9. Système selon l'une quelconque des revendications 4 à 8 lorsqu'elles sont dépendantes de la revendication 3, dans lequel la direction d'écoulement de fluide à travers le boîtier et/ou l'élément filtrant statique est sensiblement parallèle à l'axe d'arbre d'entraînement.

10. Système selon l'une quelconque des revendications 4 à 8 lorsqu'elles sont dépendantes de la revendication 3, dans lequel la direction d'écoulement à travers l'élément filtrant statique est sensiblement perpendiculaire à l'axe d'arbre d'entraînement, ou au niveau d'un angle entre sensiblement 45 degrés à 90 degrés à partir de l'axe d'arbre d'entraînement ; et, facultativement ou de préférence
dans lequel l'élément filtrant statique est agencé sensiblement dans ou sur une paroi latérale du boîtier ; et/ou
lorsqu'elles sont dépendantes de la revendication 8, dans lequel le boîtier comprend une ouverture de paroi latérale conduisant à la sortie, et l'élément filtrant statique s'étend au moins partiellement à travers l'ouverture.

11. Système selon la revendication 10, dans lequel l'unité de filtrage de polluants comprend en outre un élément de direction d'écoulement (138) configuré pour diriger au moins une partie de l'écoulement de fluide entrant vers l'élément filtrant statique, et facultativement ou de préférence, dans lequel l'élément de direction d'écoulement comprend une surface de direction d'écoulement inclinée par rapport à l'axe d'arbre d'entraînement ; et, facultativement ou de préférence, dans lequel la surface de direction d'écoulement est sensiblement conique ; et, facultativement ou de préférence, le système comprenant en outre :
un déflecteur couplé à l'extrémité frontale du boîtier pour empêcher de grands objets d'entrer dans le système, et facultativement ou de préférence, dans lequel l'élément de déflecteur (112d) est configuré pour bloquer l'entrée dans la chambre d'objets plus grands qu'une largeur des sorties de polluants.

12. Système selon l'une quelconque des revendications 3 à 11, lorsqu'elles sont dépendantes de la revendication 3,
comprenant en outre : un générateur couplé à l'arbre d'entraînement,
de telle sorte que la rotation de la turbine génère de l'électricité ; et/ou dans lequel la turbine est actionnée par l'écoulement de fluide dans le boîtier et/ou par une alimentation électrique ; et, facultativement ou de préférence
lorsqu'elles sont dépendantes de la revendication 7, dans lequel l'électricité générée est utilisée pour alimenter le système de pompage.

13. Système selon l'une quelconque des revendications 3 à 12, lorsqu'elles sont dépendantes de la revendication 3,
dans lequel les turbines contrarotatives sont couplées à l'une ou l'autre extrémité de l'arbre d'entraînement ; et facultativement ou de préférence,
le système comprenant en outre un système d'engrenage couplé à l'arbre d'entraînement, configuré pour commander la vitesse de déplacement de l'élément dynamique, facultativement ou de préférence, proportionnellement à la vitesse de rotation de l'au moins une turbine ; et/ou
dans lequel le système est configuré pour se coupler à un navire maritime.

14. Procédé destiné à réduire la pollution marine, comprenant les étapes suivantes :
fournir ou utiliser un système (100) selon l'une quelconque des revendications 1 à 13 ; et facultativement ou de préférence, une ou plusieurs étapes parmi :
fournir une unité de stockage (300) pour stocker les polluants collectés ;
enlever, vider et refixer périodiquement l'unité de stockage ; et/ou
coupler le système à une structure maritime fixe, telle qu'un pipeline, plateforme ou appontement flottant(e), ou un navire maritime, tel qu'un bateau ; et/ou, comprenant en outre les étapes suivantes :
fournir un écoulement de fluide entrant (190) contenant des polluants provenant d'un environnement aquatique ;
filtrer les polluants provenant de l'écoulement de fluide ;
diriger les polluants filtrés pour les enlever du système ; et
émettre en sortie un écoulement de fluide dépollué (195) vers l'environnement aquatique ; et/ou comprenant en outre :
trier les polluants collectés provenant du système de stockage en matériau biologique (612) et non-biologique (614) ; et facultativement ou de préférence
retourner le matériau biologique vers l'environnement aquatique, dans lequel l'environnement aquatique est l'océan.
